# EUROPEAN PATENT SPECIFICATION

(11) **EP 2 881 443 B1**
(45) Date of publication and mention of the grant of the patent: **10.10.2018**
(21) Application number: 12882467.9
(22) Date of filing: 30.07.2012
(51) Int. Cl.: C09D 201/00, C09D 5/10, C08K 3/22, C08K 3/30, C09D 129/14, C08K 5/01, C08K 5/09, C08K 5/101, C08K 5/098, C09D 163/00, C09D 175/04, C09D 7/40, C09D 7/61, C09D 7/63

(54) **COATING AND COATED STEEL**
BESCHICHTUNG UND BESCHICHTETER STAHL
PEINTURE, ET MATÉRIAU EN ACIER REVÊTU

(43) Date of publication of application: 10.06.2015
(73) Proprietor: Kyoto Materials Co. Ltd., Kyoto-shi, Kyoto 615-8245 (JP); Nagase & Co., Ltd., Osaka-shi Osaka 550-8668 (JP)
(72) Inventor: YAMASHITA Masato, Otokuni-gun Kyoto 618-0091 (JP); NOMURA Toyokazu, Obama-shi Fukui 917-0107 (JP)
(74) Representative: Nederlandsch Octrooibureau
(86) International application number: PCT/JP2012/069350
(87) International publication number: WO 2014/020665

(56) References cited:
- JP-A- H0 873 776
- JP-A- 2001 234 369
- US-A1- 2001 021 456
- G. BLUSTEIN ET AL.: 'ZINC BASIC BENZOATE AS ECO-FRIENDLY STEEL CORROSION INHIBITOR PIGMENT FOR ANTICORROSIVE EPOXY-COATINGS' COLLOIDS AND SURFACES A vol. 290, 2006, pages 7 - 18, XP027996172

## Description

### Technical Field

The present invention relates to a coating and a coated steel.

### Background Art

It is generally known when an oxide layer having a high atmospheric isolation property is formed on a surface of steel, corrosion resistance of the steel is improved. A stainless steel, for example, forms a passive film which is an oxide layer having a high atmospheric isolation property, thereby exhibiting high corrosion resistance. There are, however, a number of restrictions for the stainless steel in use for structures and machinery since the stainless steel is expensive, has problems on corrosion resistance such as occurrence of pitting corrosion due to being a high alloy steel, is inferior to a low alloy steel in mechanical properties such as strength and toughness, and so forth.

In addition, a weathering steel, which is obtained by adding a small amount of an element including P, Cu, Cr and Ni to the steel, forms rust protective against corrosion (hereinafter, referred to as protective rust) outside, thereby being able to improve the corrosion resistance of the steel in the atmosphere and to reduce necessity for the corrosion protective treatment operation such as coating thereafter. However, as it takes such a prolonged period of time as approximately ten years or more before formation of the protective rust, there may occur loose scale or flowing rust of red rust, yellow rust or the like through the initial corrosion prior to passage of the above period of time in some cases, and this has not only been unfavorable in appearance but also caused problems such as decrease of the plate thickness through corrosion. Particularly in an environment with airborne sea-salt particles, this tendency has been intensely seen, and thus the protective rust may not have been formed even after passage of a prolonged period of time in some cases when the amount of airborne salt particles is large. In addition, there has also existed a concern for a decline of the function of the protective rust to protect the steel when the amount of the airborne salt particles is increased to a certain extent.

In order to solve the problems described above, Patent Literature 1, for example, proposes a method for surface-treating to form a phosphate salt coating film on the steel. Patent Literature 2 proposes a method for forming the protective rust while suppressing the initial corrosion by resin coating of the steel. Patent Literature 3 proposes a method for covering the steel with an organic resin coating containing phosphoric acid, a sulfate salt and calcium oxide. Furthermore, Patent Literatures 4-8 also propose methods for surface-treating steel, products of surface-treated steel and the like.

US2001/0021456 discloses a steel anticorrosive coating comprising: 0,1-30% by mass of calcium oxide; 0,2-60% by mass of a metal sulfate such as aluminum, nickel, copper, chromium or cobalt sulfate; and a resin.

### Citation List

### Patent Literature

Patent Literature 1: Japanese Patent Application Laid-Open No. 01-142088
Patent Literature 2: Japanese Examined Patent Publication No. 53-22530
Patent Literature 3: Japanese Patent No. 4455712
Patent Literature 4: Japanese Patent Application Laid-Open No. 2000-17453
Patent Literature 5: Japanese Patent Application Laid-Open No. 05-51668
Patent Literature 6: Japanese Patent Application Laid-Open No. 05-247663
Patent Literature 7: Japanese Patent Application Laid-Open No. 07-207455
Patent Literature 8: Japanese Patent Application Laid-Open No. 11-217676

### Summary of Invention

### Technical Problem

Regarding the method described in Patent Literature 1, however, the contents of the treating step have been complicated in terms of, for example, a need for subjecting the steel to a suitable pretreatment prior to the formation of the phosphate salt coating. In addition, there have existed problems, for example, that in the case of necessity for welding the steel it is not easy to subject the welded parts to the above treatment, and therefore it is difficult to apply the method to building structures and the like.

Regarding the method described in Patent Literature 2, it has been found that not only suppression of the initial corrosion is insufficient in a severe corrosive environment but also the method is inferior in a facilitating effect for the formation of the protective rust.

Regarding the method described in Patent Literature 3, although it is possible to suppress the initial corrosion, there have existed problems that it takes a prolonged period of time to form the protective rust due to an excessively high corrosion resistance and that the method is inferior in workability.

Furthermore, regarding any of the technologies disclosed in Patent Literatures 1-3 described above, it has been difficult to form the protective rust in a severe corrosive environment such as that with an increased amount of the airborne salt particles, and therefore, sufficient corrosion resistance has not been thought to be successfully imparted to the steel.

The present invention has been accomplished in view of the above-described problems, and accordingly, the objects of the present invention are to provide a coating capable of imparting excellent corrosion resistance in the atmosphere and a coated steel obtained by using the coating.

### Solution to Problem

The present invention provides a coating comprising (1) calcium oxide and/or calcium hydroxide, (2) magnesium sulfate, (3) benzoic acid and/or a benzoate salt, and (4) a resin, wherein the coating comprises 0.1-30 parts by mass in total of the calcium oxide and calcium hydroxide, 0.05-15.0 parts by mass of the magnesium sulfate, and 0.01-10 parts by mass in total of the benzoic acid and the benzoate salts per 100 parts by mass of the total solid content in the coating.

In steel comprising a coating film formed of the coating described above on the surface thereof, a oxide layer having excellent corrosion resistance is formed at the interface between the coating film and the steel in an early stage with a corrosion reaction of the steel after formation of the coating film. Therefore, the steel on which the oxide layer has been formed has excellent corrosion resistance.

The coating can further comprise a metal sulfate other than magnesium sulfate, and/or phosphoric acid, wherein the metal sulfate can have a solubility of 0.5 g or more in 100 g of water at 5°C. The coating can comprise 20 parts by mass or less in total of the metal sulfates and the phosphoric acid per 100 parts by mass of the total solid content in the coating.

When the coating comprises the metal sulfate other than magnesium sulfate, and/or the phosphoric acid at the specified mass ratio, this can further improve the corrosion resistance of the steel on which the oxide layer has been formed.

The coating can further comprise at least one compound selected from the group consisting of sebacic acid, sebacate salts, and silicate salts. The coating can comprise 20 parts by mass or less in total of the sebacic acid, the sebacate salts, and the silicate salts per 100 parts by mass of the total solid content in the coating.

When the coating comprises the at least one compound selected from the group consisting of sebacic acid, sebacate salts, and silicate salts at the specified mass ratio, this can further improve the corrosion resistance of the steel on which the oxide layer has been formed.

The coating can further comprise at least one metal powder selected from the group consisting of an aluminum powder, a zinc powder, and alloy powders containing aluminum and/or zinc. The coating can comprise 80 parts by mass or less in total of the aluminum powder, the zinc powder, and the alloy powders containing aluminum and/or zinc per 100 parts by mass of the total solid content in the coating.

When the coating comprises the at least one metal powder selected from the group consisting of an aluminum powder, a zinc powder, and alloy powders containing aluminum and/or zinc at the specified mass ratio, this can further improve the corrosion resistance of the steel on which the oxide layer has been formed.

The coating can further comprise a solvent.

The coating can comprise 3-95 parts by mass of the resin per 100 parts by mass of the total solid content in the coating.

The present invention further provides a coated steel comprising steel and a coating film formed on the surface of the steel, wherein the coating film comprises calcium oxide and/or calcium hydroxide; magnesium sulfate; benzoic acid and/or a benzoate salt; and a resin, and wherein the coating film comprises 0.1-30 parts by mass in total of the calcium oxide and calcium hydroxide, 0.05-15.0 parts by mass of the magnesium sulfate, and 0.01-10 parts by mass in total of the benzoic acid and the benzoate salts per 100 parts by mass of the coating film.

In the coated steel, the oxide layer can be formed on the surface of the steel in an early stage, not particularly depending on the material of the steel. Therefore, the coated steel is excellent in corrosion resistance.

The steel may be a plated steel.

### Advantageous Effects of Invention

In the steel comprising a coating film formed of the coating of the present invention on the surface thereof, a oxide layer having excellent corrosion resistance is formed at the interface between the coating film and the steel in an early stage with a corrosion reaction after formation of the coating film. Therefore, the steel on which the oxide layer has been formed has excellent corrosion resistance.

### Brief Description of Drawings

[Figure 1] Figure 1 is a schematic cross section view of a coated steel according to an embodiment of the present invention.
[Figure 2] Figure 2 is a schematic cross section view of a coated steel according to another embodiment of the present invention.

### Description of Embodiments

Hereinafter, preferred embodiments according to the present invention are described.

### (Coating)

The coating according to the present embodiment comprises (1) calcium oxide and/or calcium hydroxide, (2) magnesium sulfate, (3) benzoic acid and/or a benzoate salt, and (4) a resin.

When the coating according to the present embodiment is applied on steel, a dense oxide layer is formed at the interface between the coating film formed of the coating and the steel, and therefore water, oxygen and a variety of corrosive substances present in an external corrosive environment can be suppressed from excessively penetrating to the steel (barrier effect). The steel on which the oxide layer has been formed has excellent corrosion resistance even when exposed to the corrosive environment for a prolonged period of time. It is noted that the coating according to the present embodiment also can be used by mixing with a common coating other than the coating according to the present embodiment, e.g., an epoxy resin coating. The effect provided by using the coating according to the present embodiment is naturally exerted and not inhibited even when the coating according to the present embodiment and another common coating are mixed together. In addition, the effects which the components (1), (2) and (3) in the coating according to the present embodiment exert are not inhibited even when the components (1), (2) and (3) are mixed with another common coating,

### [Calcium oxide and calcium hydroxide]

In the coating, the calcium oxide may account for 80 parts by mass or more, or 90 parts by mass or more of 100 parts by mass in total of the calcium oxide and the calcium hydroxide. When the calcium oxide accounts for 80 parts by mass or more of 100 parts by mass in total of the calcium oxide and the calcium hydroxide, stability of the coating tends to be improved. It is noted that the mass ratio of the calcium oxide to the total of the calcium oxide and the calcium hydroxide is not limited to the above range when the coating includes water as the solvent.

The coating comprises 0.1-30 parts by mass in total of the calcium oxide and calcium hydroxide per 100 parts by mass of the total solid content in the coating. When the coating comprises 0.1 part by mass or more in total of the calcium oxide and calcium hydroxide, the function and effect exerted by the calcium oxide or calcium hydroxide described below can be attained. When the coating comprises more than 30 parts by mass in total of the calcium oxide and calcium hydroxide, the coating film formed of the coating may become brittle, and additionally the calcium oxide present in a cluster-like state may be dissolved in water to form pin hole-like defects in the coating film, thereby facilitating corrosion of the steel. The lower limit value of the total content of the calcium oxide and calcium hydroxide may be 1 part by mass, or 6 parts by mass per 100 parts by mass of the total solid content in the coating. The upper limit value of the total content of the calcium oxide and calcium hydroxide may be 25 parts by mass per 100 parts by mass of the total solid content in the coating. It is noted that, as used herein, the total solid content in the coating can be deemed as the total mass of the ingredients included in the coating except for the so-called solvent.

The calcium oxide, when contacted with moisture, is converted to the calcium hydroxide, followed by dissociating to supply a calcium ion. Therefore, when moisture is supplied into the coating film in the corrosive environment, the calcium ion is supplied into the coating film. The calcium ion produced reacts with a sulfate ion similarly produced through dissociation of the magnesium sulfate to produce calcium sulfate which is hardly soluble in water. Such calcium sulfate can embed void parts in the oxide layer which have been formed at the interface between the coating film and the steel through the corrosion reaction in parallel with the production of the calcium sulfate, thereby densifying the oxide layer. By densifying the oxide layer in such a manner, the substances facilitating the steel corrosion from the external environment, such as water, oxygen, salt and sulfurous acid gas, can be suppressed from penetrating through the oxide layer.

### [Magnesium sulfate]

The coating comprises 0.05-15.0 parts by mass of the magnesium sulfate per 100 parts by mass of the total solid content in the coating. When the coating comprises 0.05 part by mass or more of the magnesium sulfate, the function and effect exerted by the magnesium sulfate described below can be attained. When the coating comprises more than 15 parts by mass of the magnesium sulfate, this may be possibly a factor to inhibit drying of the coating due to hygroscopicity of the magnesium sulfate, and further the coating film may possibly become brittle. The lower limit value of the magnesium sulfate content may be 0.5 part by mass, or 3 parts by mass per 100 parts by mass of the total solid content in the coating. The upper limit value of the magnesium sulfate content may be 10 parts by mass per 100 parts by mass of the total solid content in the coating.

The magnesium sulfate, when contacted with moisture, dissociates to supply a sulfate ion and a magnesium ion. Therefore, when moisture is supplied into the coating film in the corrosive environment, the sulfate ion and the magnesium ion are supplied into the coating film.

As described above, the sulfate ion produced through dissociation of the magnesium sulfate is bound to the calcium ion to produced calcium sulfate which is hardly soluble in water, thereby being able to densify the oxide layer. In addition, the sulfate ion can accelerate an elution reaction, which is the very early corrosion of the steel, to facilitate the early formation of the oxide layer. Furthermore, when the sulfate ion and hydroxide ion produced through dissociation of the calcium hydroxide are present in the coating film, the hydroxide ion raises the pH over the surface of the steel and precipitates the metal ions eluted from the steel by the sulfate ion as oxides, oxyhydroxides or the like in an early stage, and therefore the early formation of the oxide layer is still more facilitated.

On the other hand, the magnesium ion produced through dissociation of the magnesium sulfate can substitute for a metal ion which forms the oxide in the oxide layer. The oxide crystal in which the metal ion has been replaced with the magnesium ion can become a super-fine crystal in a nanometer order, thereby enhancing aggregability of the oxide layer. In addition, the magnesium ion forms a complex ion with a plurality of the oxygen ions in the oxide and the complex ion has a negative fixed charge, thereby being able to suppress invasion of the corrosive anions such as a chloride ion and the sulfate ion into the oxide layer. Furthermore, since magnesium has a low equilibrium potential, the steel can be also suppressed from being excessively eluted.

When the magnesium ion is converted to an oxide, an oxide layer is also formed of the oxide. Since the oxide is hardly soluble in water and a function and effect by the benzoic acid and/or the benzoate salt described below can be further attained also to the oxide, the oxide can become fine crystals which aggregate, thereby densifying the oxide layer.

### [Benzoic acid and benzoate salts]

Preferably, the benzoate salt has a solubility of 0.5 g or more in 100 g of water at 5°C under 1 atm (1013.25 hPa). Examples of the benzoate salt include metal benzoates such as sodium benzoate, potassium benzoate, and lithium benzoate; ammonium benzoate, and the like.

The coating comprises 0.01-10 parts by mass in total of the benzoic acid and the benzoate salts per 100 parts by mass of a total solid content in the coating. When the coating comprises 0.01 part by mass or more in total of the benzoic acid and the benzoate salts, the function and effect exerted by the benzoic acid and/or the benzoate salt described below can be attained. When the coating comprises more than 10 parts by mass in total of the benzoic acid and the benzoate salts, the adherence between the coating film and the steel may be possibly lowered. The lower limit value of the total content of the benzoic acid and the benzoate salts may be 1 part by mass, or 2 parts by mass per 100 parts by mass of the total solid content in the coating. The upper limit value of the total content of the benzoic acid and the benzoate salts may be 8 parts by mass per 100 parts by mass of the total solid content in the coating.

The benzoic acid and the benzoate salt, when contacted with moisture, dissociate to supply a benzoate ion. The benzoate ion is adsorbed on the surface of the oxide crystal in the oxide layer, thereby being able to suppress the crystal growth of the oxide. By suppressing the crystal growth and enhancing aggregability of the oxide crystal, the oxide layer can be denser.

### [Resin]

The resin included in the coating is not particularly limited, but examples thereof include vinyl butyral resins (polyvinyl butyral resin and the like), epoxy resins, modified epoxy resins, acrylic resins, urethane resins, nitrocellulose resins, vinyl resins (polyvinyl chloride, polyvinyl acetate, polyvinyl alcohol and the like), phthalic acid resins, melamine resins and the like. These resins may be thermoplastic or thermosetting resins. When the resin is a thermosetting resin, the coating can further include a curing agent as necessary, and typically the coating is cured during or after drying. The weight average molecular weight of the thermosetting resin is not particularly limited, but is about 200-20000. The weight average molecular weight of the thermoplastic resin is also not particularly limited, but is about 10000-5000000. When the coating includes the resin, the respective ingredients exerting the function and effect of the present embodiment are retained on the surface of the steel even after the coating is applied on the surface of the steel. Accordingly, the respective ingredients exerting the function and effect of the present embodiment can be suppressed from being washed to the outside by rainfall, condensation or the like prior to the formation of the oxide layer.

The lower limit value of the resin content in the coating may be, for example, 3 parts by mass, 5 parts by mass, 10 parts by mass, or 20 parts by mass per 100 parts by mass of the total solid content in the coating. When the resin content is 3 parts by mass or more, the coating film tends to be readily retained on the steel until the oxide layer is formed on the steel. The upper limit value of the resin content in the coating may be, for example, 95 parts by mass, 90 parts by mass, 70 parts by mass, or 50 parts by mass per 100 parts by mass of the total solid content in the coating. When the resin content is 95 parts by mass or less, the oxide layer tends to be readily formed on the steel.

### [Metal sulfates other than magnesium sulfate and phosphoric acid]

The coating may further comprise a metal sulfate other than magnesium sulfate, and/or phosphoric acid.

When the coating comprises the metal sulfate other than magnesium sulfate and/or the phosphoric acid, the total content of the metal sulfates other than magnesium sulfate, and the phosphoric acid can be 20 parts by mass or less per 100 parts by mass of the total solid content in the coating. When the upper limit of the total content of the metal sulfates other than magnesium sulfate, and the phosphoric acid is 20 parts by mass, the coating film can be suppressed from becoming brittle and from being collapsed or peeled prior to attaining the function and effect according to the present embodiment. The total content of the metal sulfates other than magnesium sulfate, and the phosphoric acid can be 0.3 part by mass or more per 100 parts by mass of the total solid content in the coating. When the lower limit of the total content of the metal sulfates other than magnesium sulfate, and the phosphoric acid is 0.3 part by mass, the function and effect exerted by the metal sulfate other than magnesium sulfate, or the phosphoric acid described below can be attained. The lower limit value of the total content of the metal sulfates other than magnesium sulfate, and the phosphoric acid may be 0.5 part by mass, or 1 part by mass per 100 parts by mass of the total solid content in the coating. The upper limit value of the total content of the metal sulfates other than magnesium sulfate, and the phosphoric acid may be 19 parts by mass, or 15 parts by mass per 100 parts by mass of the total solid content in the coating.

The metal sulfate other than magnesium sulfate has a solubility of 0.5 g or more in 100 g of water at 5°C under 1 atm (1013.25 hPa). Therefore, in an ordinary atmospheric corrosive environment, dissociation of the metal sulfate other than magnesium sulfate may occur when moisture is supplied by rainfall or condensation even in a winter season where the temperature is low. The metal sulfate other than magnesium sulfate dissociates into a metal ion other than magnesium sulfate and a sulfate ion when moisture is supplied. The sulfate ion produced through dissociation of the metal sulfate other than magnesium sulfate reacts with the calcium ion to produce calcium sulfate which is hardly soluble in water in the same manner as the sulfate ion produced through dissociation of the magnesium sulfate. The calcium sulfate produced can then embed the void parts in the oxide layer, thereby further densifying the oxide layer.

The phosphoric acid, when contacted with moisture, dissociates into a hydrogen ion and a phosphate ion. The above-described function and effect by the calcium sulfate produced from the sulfate ion are attained also by calcium phosphate produced through a reaction between the calcium ion and the phosphate ion.

When the coating further comprises the metal sulfate other than magnesium sulfate in addition to the magnesium sulfate, the above-described function and effect by the calcium sulfate can be further enhanced. The enhancement of the above-described function and effect by the calcium sulfate can be also attained by not including the metal sulfate other than magnesium sulfate in the coating but including the magnesium sulfate in an amount exceeding the above predetermined range. When the coating includes the magnesium sulfate and the metal sulfate other than magnesium sulfate, however, the coating film can be suppressed from becoming brittle compared with the case where the coating does not include the metal sulfate other than magnesium sulfate and includes the magnesium sulfate in an amount exceeding the above predetermined range. In addition, when the coating includes the magnesium sulfate and the metal sulfate other than magnesium sulfate, the coating can be suppressed from being inhibited to be dried due to moisture absorption compared with the case where the coating does not include the metal sulfate other than magnesium sulfate and includes the magnesium sulfate in an amount exceeding the above predetermined range.

The metal sulfate other than magnesium sulfate can be, for example, aluminum sulfate, nickel sulfate, cobalt sulfate, copper sulfate, iron sulfate or zinc sulfate. When a metal ion produced through dissociation of metal sulfate other than magnesium sulfate is converted to an oxide, an oxide layer is also formed of such oxide. Since the oxide is hardly soluble in water and the function and effect by the benzoic acid or the benzoate salt described above can be attained also to the oxide, the oxide becomes a fine crystal to aggregate, thereby being able to further densify the oxide layer. The metal ion produced through dissociation of the metal sulfate can impart ion-selective penetration property to the oxide layer, thereby suppressing penetration of the corrosive anions.

### [Sebacic acid, sebacate salts, and silicate salts]

The coating may further comprise at least one compound selected from the group consisting of sebacic acid, sebacate salts, and silicate salts. The sebacic acid and the sebacate salt, when contacted with moisture, dissociate to supply a sebacate ion. The silicate salt, when contacted with moisture, dissociates to supply a silicate ion. When the coating comprises at least one compound selected from the group consisting of sebacic acid, the sebacate salts, and the silicate salts, the sebacate ion produced through dissociation of the sebacic acid or the sebacate salt, or the silicate ion produced through dissociation of the silicate salt is adsorbed on the surface of the steel, thereby being able to control the elution rate of the steel so as to be reduced. Particularly, when present in a severe corrosive environment, the function and effect according to the present embodiment can be attained at a higher level.

Examples of the sebacate salt include, for example, disodium sebacate and diammonium sebacate. Examples of the silicate salt include, for example, sodium silicate and potassium silicate.

When the coating comprises the at least one compound selected from the group consisting of sebacic acid, the sebacate salts, and the silicate salts, the total content of the sebacic acid, the sebacate salts, and the silicate salts can be 20 parts by mass or less per 100 parts by mass of the total solid content in the coating. When the upper limit of the total content of the sebacic acid, the sebacate salts, and the silicate salts is 20 parts by mass, the coating film can be suppressed from becoming brittle and from being collapsed or peeled prior to attaining the function and effect according to the present embodiment.

The total of the sebacic acid, the sebacate salts, and the silicate salts can be 0.3 part by mass or more per 100 parts by mass of the total solid content in the coating. The lower limit value of the total of the sebacic acid, the sebacate salts, and the silicate salts may be 0.5 part by mass, 1 part by mass, 5 parts by mass, or 6 parts by mass per 100 parts by mass of the total solid content in the coating. The upper limit value for the total of the sebacic acid, the sebacate salts, and the silicate salts may be 15 parts by mass per 100 parts by mass of the total solid content in the coating.

### [Metal powder]

The coating may further comprise at least one metal powder selected from the group consisting of an aluminum powder, a zinc powder, and alloy powders containing aluminum and/or zinc. The mean particle diameter of the metal powder may be 1-10 µm, or 20-30 µm. The shape of the metal powder is not particularly limited, but may be any of a spherical, a needle-like, a plate-like, a fractured shape and the like. Aluminum or zinc is a common metal which may be plated on steel in order to attain anti-corrosive action of the steel. When the coating comprises at least one metal powder selected from the group consisting of aluminum powder, zinc powder, and alloy powders containing aluminum and/or zinc, and when, for example, the steel is a plated steel as described below which has been already worn through corrosion or the like, the sacrificial anti-corrosive action possessed by the plated steel can be assisted. In addition, since an oxide layer can be formed also on the surface of these metal powders due to the effect of the present embodiment, it is possible to reduce wear of the metal powder, while retaining the sacrificial anti-corrosive action to the steel.

When the coating comprises at least one metal powder selected from the group consisting of aluminum powder, zinc powder, and alloy powders containing aluminum and/or zinc, the total of the aluminum powder, the zinc powder, and alloy powders containing aluminum and/or zinc can be 80 parts by mass or less per 100 parts by mass of the total solid content in the coating. When the upper limit of the total content of the aluminum powder, the zinc powder, and alloy powders containing aluminum and/or zinc is 80 parts by mass, the coating film can be suppressed from being peeled from the steel in an early stage.

The total content of the aluminum powder, the zinc powder, and alloy powders containing aluminum and/or zinc can be 0.3 part by mass or more per 100 parts by mass of the total solid content in the coating. The lower limit value of the total content of the aluminum powder, the zinc powder, and alloy powders containing aluminum and/or zinc may be 5 parts by mass, 10 parts by mass, 20 parts by mass, or 40 parts by mass per 100 parts by mass of the total solid content in the coating. The upper limit value of the total content of the aluminum powder, the zinc powder, and alloy powders containing aluminum and/or zinc may be 75 parts by mass per 100 parts by mass of the total solid content in the coating.

### [Other ingredients]

The coating can comprise other common additives such as a coloring pigment, an extender pigment, a rust preventive pigment, and special functional pigments as well as a thixotropy imparting agent, a dispersant, and an antioxidant agent as necessary. Although the coating may include the rust preventive pigment in order to control the anticorrosion property in the case of the severe corrosive environment, content thereof can be 10 parts by mass or less per 100 parts by mass of the total solid content in the coating in order not to impart the excessive anticorrosion property to the coated steel.

### [Solvent]

The coating can further comprise a solvent. Examples of the solvent include non-aqueous solvents such as aromatic solvents, e.g., xylene and toluene, alcoholic solvents of carbon number 3 or more, e.g., isopropyl alcohol and normal butanol, and ester-based solvents, e.g., ethyl acetate; and aqueous solvents such as water, methyl alcohol and ethyl alcohol. In addition, the resin described above can be that soluble in the solvent, or may be either that soluble in the non-aqueous solvent or soluble in the aqueous solvent.

As described herein, the viscosity of the coating is measured by a Brookfield viscometer at 20°C. The viscosity of the coating is suitably selected depending upon the application method, but can be 200-1000 cps. The content of the solvent in the coating can be adjusted so that the viscosity of the coating falls in the above range.

### (Coated steel)

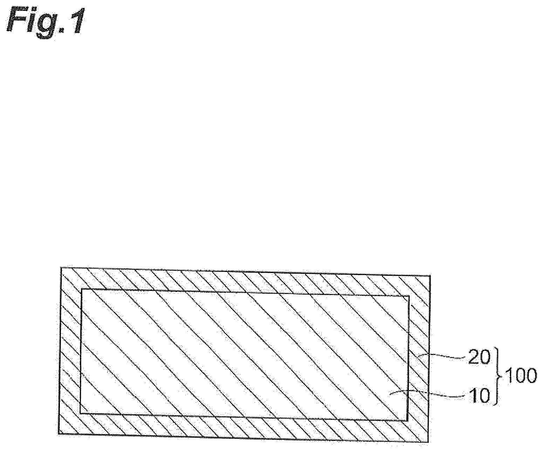

Figure 1 is a schematic cross section view of a coated steel according to an embodiment of the present invention. A coated steel 100 comprises steel 10 and a coating film 20 formed on the surface of the steel 10, and the coating film 20 comprises calcium oxide and/or calcium hydroxide, magnesium sulfate, benzoic acid and/or a benzoate salt, and a resin. The coating film comprises 0.1-30 parts by mass in total of the calcium oxide and calcium hydroxide, 0.05-15.0 parts by mass of the magnesium sulfate, and 0.01-10 parts by mass in total of the benzoic acid and the benzoate salts per 100 parts by mass of the coating film.

The coating film is formed by applying the coating according to the present embodiment and, as necessary, drying (removing the solvent). Accordingly, the coating film can comprise, as the coating material can, metal sulfate other than magnesium sulfate, and/or phosphoric acid; at least one compound selected from the group consisting of sebacic acid, sebacate salts, and silicate salts; at least one metal powder selected from the group consisting of an aluminum powder, a zinc powder, and alloy powders containing aluminum and/or zinc; other additives and the like. In addition, the content of each compound per 100 parts by mass of the total solid content in the coating in the description concerning the coating can be considered as the content of the compound in the coating film per 100 parts by mass of the coating film.

In the coated steel according to the present embodiment, a densified oxide layer is formed at the interface between the coating film and the steel, and therefore water, oxygen and a variety of corrosive substances present in the external corrosive environment can be suppressed from excessively penetrating to the steel (barrier effect). The coated steel with the oxide layer formed has excellent corrosion resistance.

It is noted that the mass ratio of calcium oxide to the total of calcium oxide and calcium hydroxide in the coating film is not particularly limited. As the coating film absorbs moisture in the environment, the above ratio of the calcium oxide tends to decrease. In the coating film, the function and effect described above can be expected independent of the ratio of the calcium oxide and the calcium hydroxide.

The thickness of the coating film can be 1-500 µm. When the thickness of the coating film is 1 µm or more, the respective ingredients such as the calcium oxide, the magnesium sulfate, and the benzoic acid and/or the benzoate salt are sufficiently retained on the steel to improve the barrier effect, thereby the corrosion of the steel tends not to excessively precede. Particularly, even in an environment with airborne sea-salt particles, the excessive corrosion due to penetration of the chloride ion is prevented and the oxide layer tends to be successfully formed. When the thickness of the coating film is 50 µm or less, it is not only economically advantageous, but also the coating film can be suppressed from being cracked or peeled from the surface of the steel in the case, for example, where a bending moment is generated in the coating film due to a stress generated in the steel as the substrate by some influence. The lower limit value of the thickness of the coating film may be 5 µm, 30 µm, or 60 µm. The upper limit value of the thickness of the coating film may be 300 µm, or 120 µm.

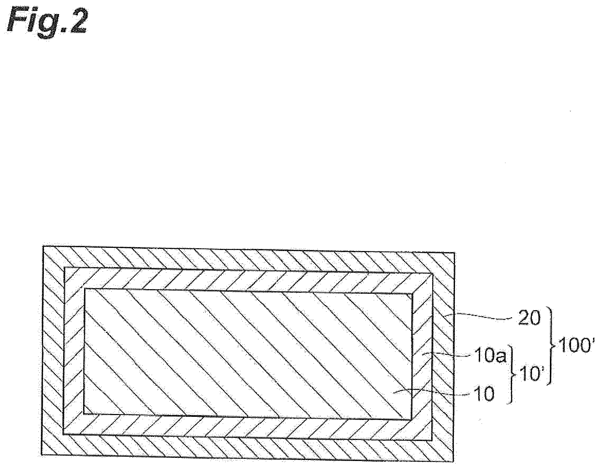

The type of the steel in the present embodiment is not particularly limited, but may be common steel, or special steel such as an alloy steel. In addition, the steel may be a plated steel 10' comprising a plated layer 10a formed of a metal having anti-corrosive function such as aluminum, zinc and an alloy thereof on the surface of the steel 10 as shown in Figure 2. The plated steel 10' includes, for example, a hot-dip galvanized steel. An oxide layer may not have been formed or may have been already formed on the surface of the steel prior to application of the coating.

The coated steel according to the present embodiment can be obtained by, for example, applying the coating on the surface of the steel, followed by drying the coating as necessary to form the coating film on the steel. It is noted that the surface of the steel may be polished by shot-blasting, an electric tool or the like prior to the application of the coating, or in the case where the surface of the steel has rust, the rust readily removable may be removed with a wire brush or the like. Examples of the method of applying the coating include air spraying, air-less spraying, brush application and the like. The drying of the coating is performed by, for example, natural drying in the air at normal temperature (25°C) and under normal pressure (1 atm). The drying time is varied depending upon a drying formula, but is typically from approximately 30 minutes to 6 hours and selected to an extent to attain a practical coating film strength. According to the application method, the coating can be applied anywhere. In addition, since the coating film can be obtained by a single applying operation, the application method is excellent also in economic efficiency. Furthermore, since the application can be performed at a site where the coated steel is arranged, the application method is available to the application following the working such as cutting and welding of the steel at the arranged site.

### Examples

Hereinafter, the present invention is more specifically illustrated by reference to Examples of the present invention, but the present invention is not limited to these Examples and a variety of modifications can be made without departing from the technical idea of the present invention.

### (Example 1)

### [Preparation of coating]

With proper amounts of xylene, toluene and isopropyl alcohol, were mixed 0.1 part by mass of calcium oxide, 0.05 part by mass of magnesium sulfate, 0.01 part by mass of sodium benzoate, 10 parts by mass of an extender/coloring pigment, and 89.84 parts by mass of a vinyl butyral resin such that the viscosity of the resulting coating would be 200-1000 cps at 20°C, to obtain the coating. The viscosity of the coating as determined by using a Brookfield viscometer at 20°C was 500 cps. The extender/coloring pigment is composed of barium sulfate and calcium carbonate as extender pigments and of red iron oxide, carbon (inorganic pigments) and phthalocyanine blue (organic pigment) as coloring pigments, including both types of pigment at equivalent parts by mass.

### [Manufacture of coated steel]

The surface of each specimen of common steel having a dimension of 200 × 100 × 3.5 mm was subjected to derusting by shot-blasting. The resulting coating was applied to the surface of the specimen after derusting by the air spraying method. Then, the specimen after application of the coating was dried in the air at normal temperature (25°C) for 7 days according to the usual coating film testing method to obtain a coated steel. The thickness of the coating film formed of the coating was 1 µm.

### (Examples 2-400 and Comparative Examples 1-20)

Each coating was obtained in the same manner as that in Example 1 except that the composition of the coating was changed to each one set forth in Tables 4-45. Then, each coated steel was obtained in the same manner as that in Example 1 except that the material of the steel specimen, the pretreatment method, and the coating film thickness were changed to those set forth in Tables 4-45. It is noted that the amount of the solvent in each coating was suitably adjusted such that the viscosity of the coating as determined by using a Brookfield viscometer at 20°C was 200-1000 cps.

Symbols in the column of the steel specimen, those in the column of the pretreatment method, and those in the column of the resin in the Tables 4-45 are explained in Tables 1, 2, and 3, respectively. Table 1 is that shows the chemical components and presence of zinc-plating on the steels. The unit of any numerical value in Table 1 is % by mass and the chemical component other than those set forth in Table 1 is iron (Fe). The mean particle diameter of the zinc powder in Tables 4-45 is 4 µm and that of the aluminum powder is 6 µm.

**[Table 1]**

| | | C | Si | Mn | P | S | Al | N |
|---|---|---|---|---|---|---|---|---|
| I | Common steel | 0.10 | 0.15 | 0.31 | 0.005 | 0.003 | 0.001 | 0.002 |
| II | Hot-dip galvanized steel | Steel obtained by subjecting the common steel I to hot-dip galvanization to a mean plating thickness of 20 µm | | | | | | |

**[Table 2]**

| | Pretreatment method of steel |
|---|---|
| X | To shot-blast the steel to remove black scale or stains on the surface |
| Y | To expose the steel to the atmospheric environment under the same conditions as those of the exposure testing described below except for the period of time of 60 days to naturally form an oxide layer such as a rust layer on the surface of the steel |

**[Table 3]**

| | Resin | |
|---|---|---|
| A | Polyvinyl butyral resin | S-LEC B, produced by Sekisui Chemical Co., Ltd., molecular weight: 25,000 |
| B | Epoxy resin | Epikote, produced by Mitsubishi Chemical Corporation, epoxy equivalent: 160-170 |
| | Polyaminoamide resin | Tohmide, produced by Fuji Kasei Co., Ltd., amine value: 212 |
| C | Epoxy resin | Epikote, produced by Mitsubishi Chemical Corporation, epoxy equivalent: 160-170 |
| | Petroleum resin | Quintone, produced by Zeon Corporation |
| | Polyaminoamide resin | Tohmide, produced by Fuji Kasei Co., Ltd., amine value: 212 |
| D | Polyurethane resin | Polyester polyol, produced by DIC Corporation, hydroxyl value: 180-220 |
| | | Polyisocyanate, produced by DIC Corporation, NCO: 23.0-24.0 |

### [Evaluation of thickness reduction of steel material after vs. before exposure testing]

The coated steels obtained in Examples 1-400 and Comparative Examples 1-20 were subjected to the exposure testing to the atmospheric environment for 10 years in a state where the coated steels were horizontally set at a location 20 m from the seashore having Obama-bay located in the west in Obama-city, Fukui prefecture, Japan (35°31'49.39" north latitude, 135°45'4.69" east longitude). It is noted that the annual mean amount of airborne salt particles at the state for exposure is about 0.8 mg NaCl/100 cm²/day, which indicates a severe corrosive environment being strongly affected by the airborne sea-salt particles.

When the common steel (I) set forth in Table 1 was used as each specimen and the specimen was further subjected to the pretreatment X, the coating film was removed from the coated steel after the exposure testing by using a coating film remover, and then the resulting steel was immersed in a mixed aqueous solution of diammonium citrate and a trace of corrosion inhibiting solution for derusting. The thickness reduction for each specimen after vs. before the exposure testing was determined by comparing the mass of the steel after the derusting with that of the specimen before the exposure testing. It is noted that the thickness reduction was determined based on the assumption that the steel thickness was reduced homogeneously over the whole surface thereof. When the common steel (I) set forth in Table 1 was used as each specimen and the specimen was further subjected to the pretreatment Y, another specimen which was subjected to the pretreatment Y was derusted in the same manner as that described above, and the thickness reduction of each steel was determined in the same manner as that described above except for regarding the mass of the specimen after the derusting as the mass of the specimen before the exposure testing.

When the hot-dip galvanized steel (II) set forth in Table 1 was used as each specimen, the thickness reduction of each steel after vs. before the exposure testing (in the case of the hot-dip galvanized steel, the total thickness reduction for the zinc-plating layer and the common steel as the substrate) was determined by measuring the thicknesses of the zinc-plating layer through observation of the specimen cross section before and after the exposure testing and comparing the two. The evaluation results are shown in Tables 4-45.

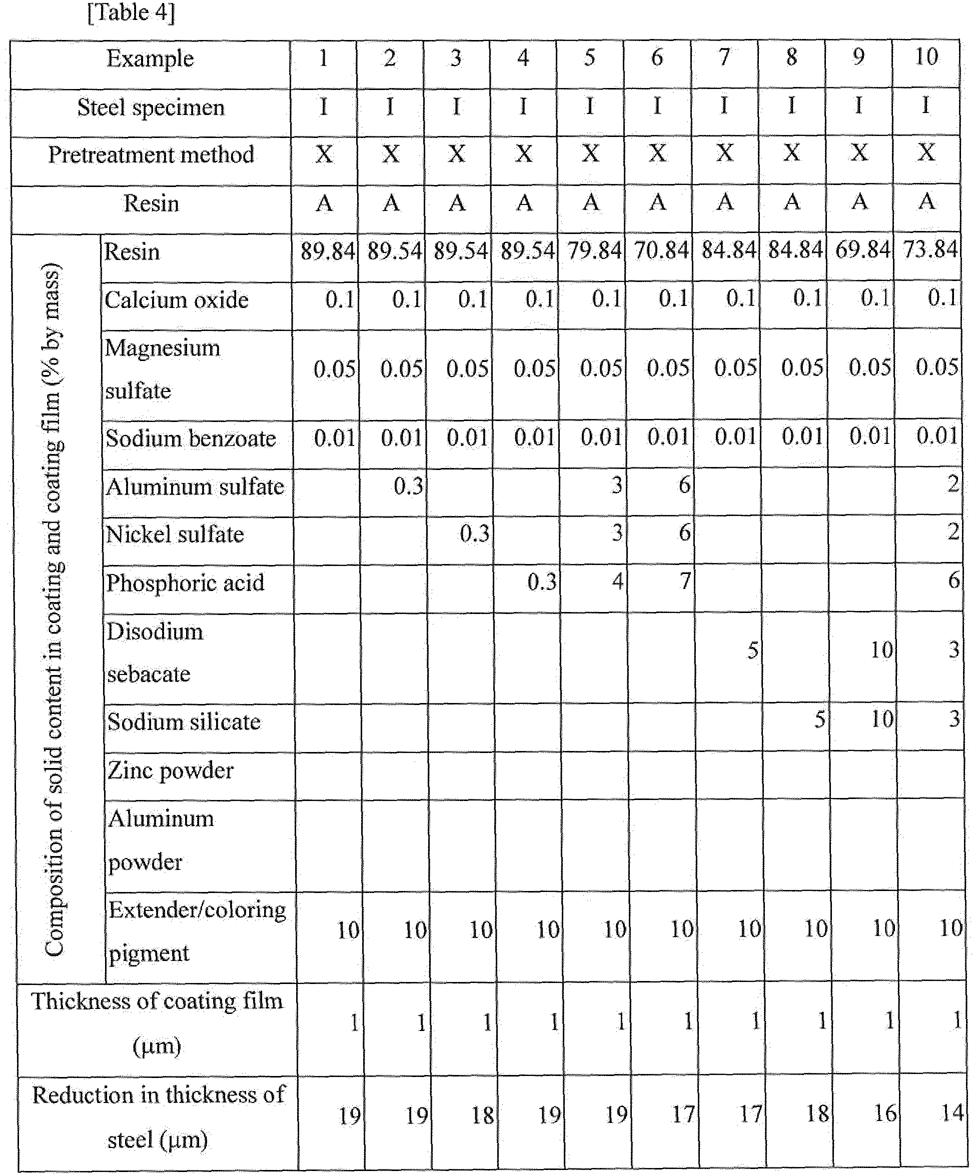

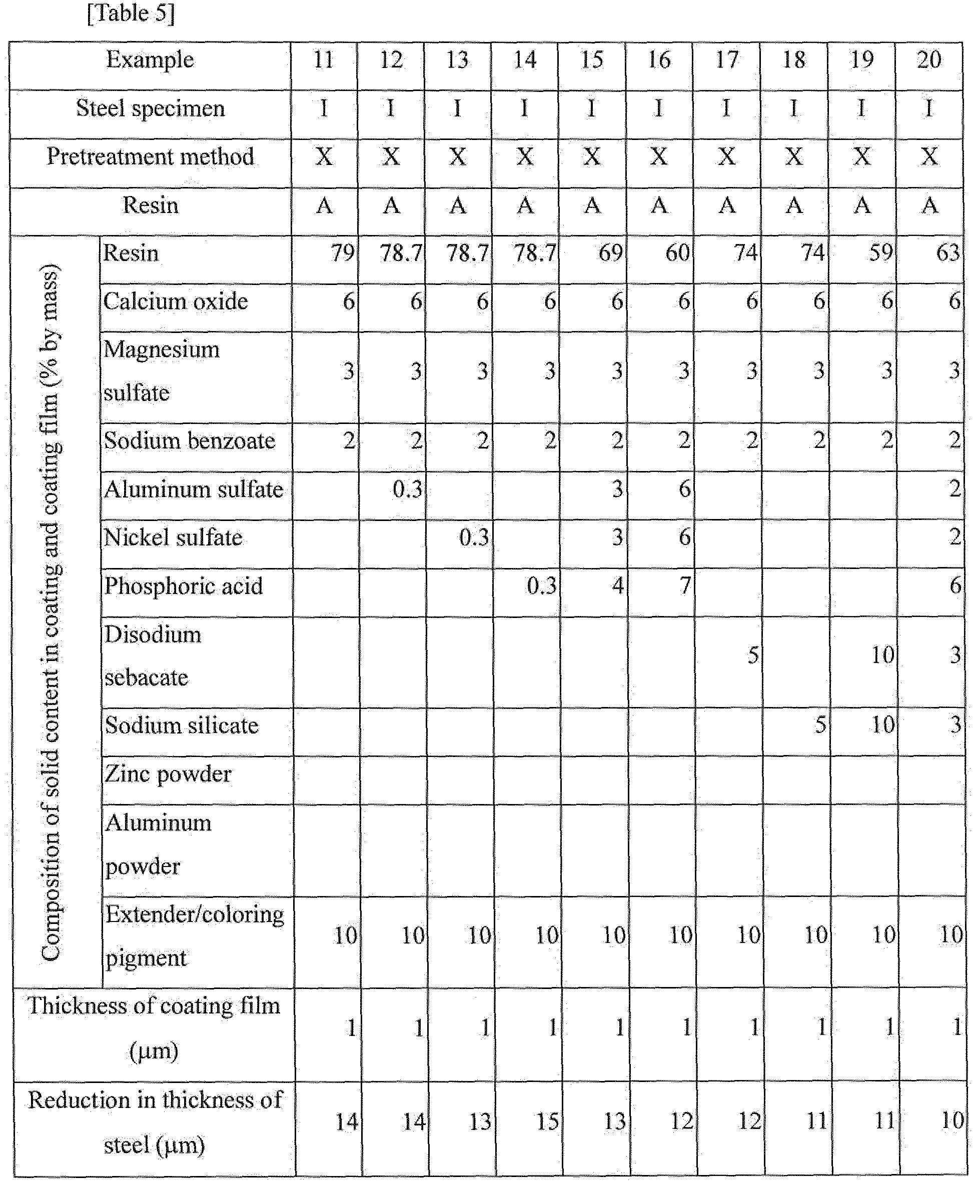

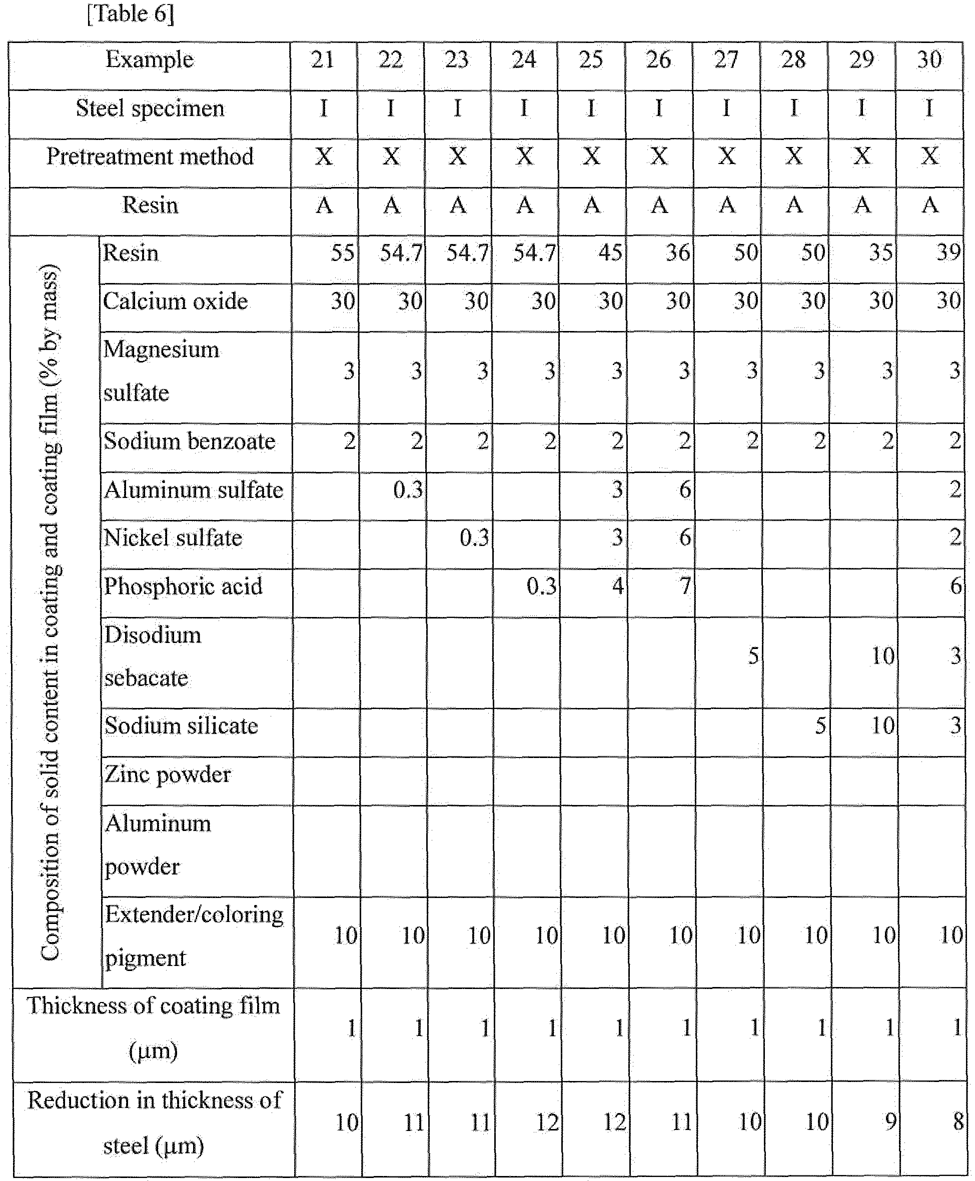

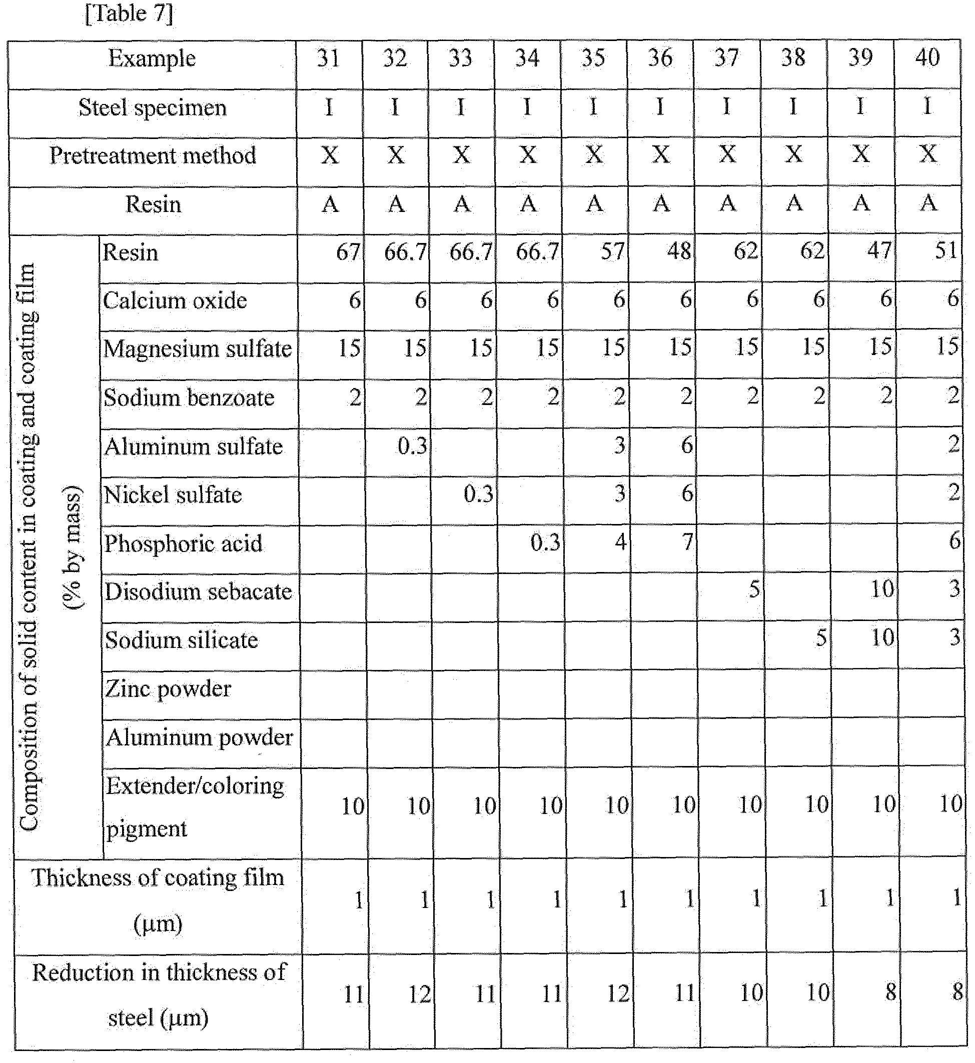

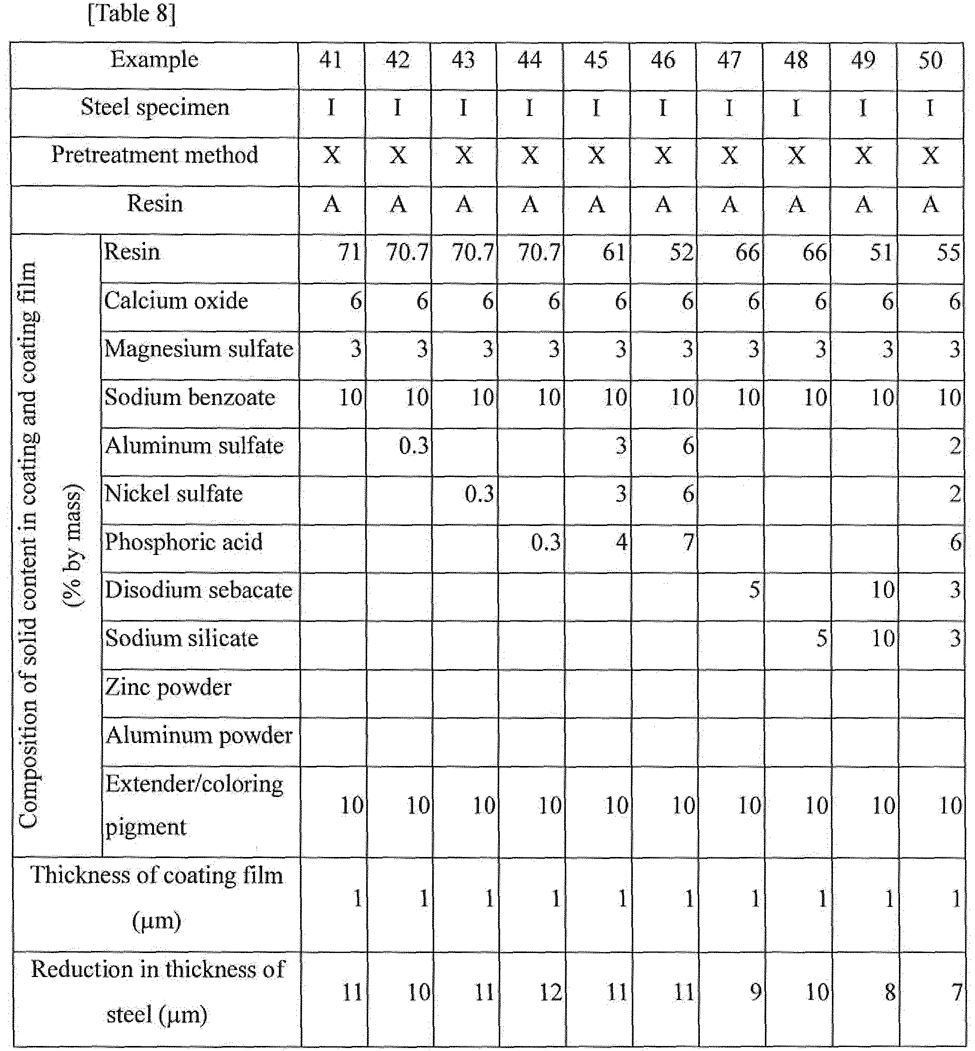

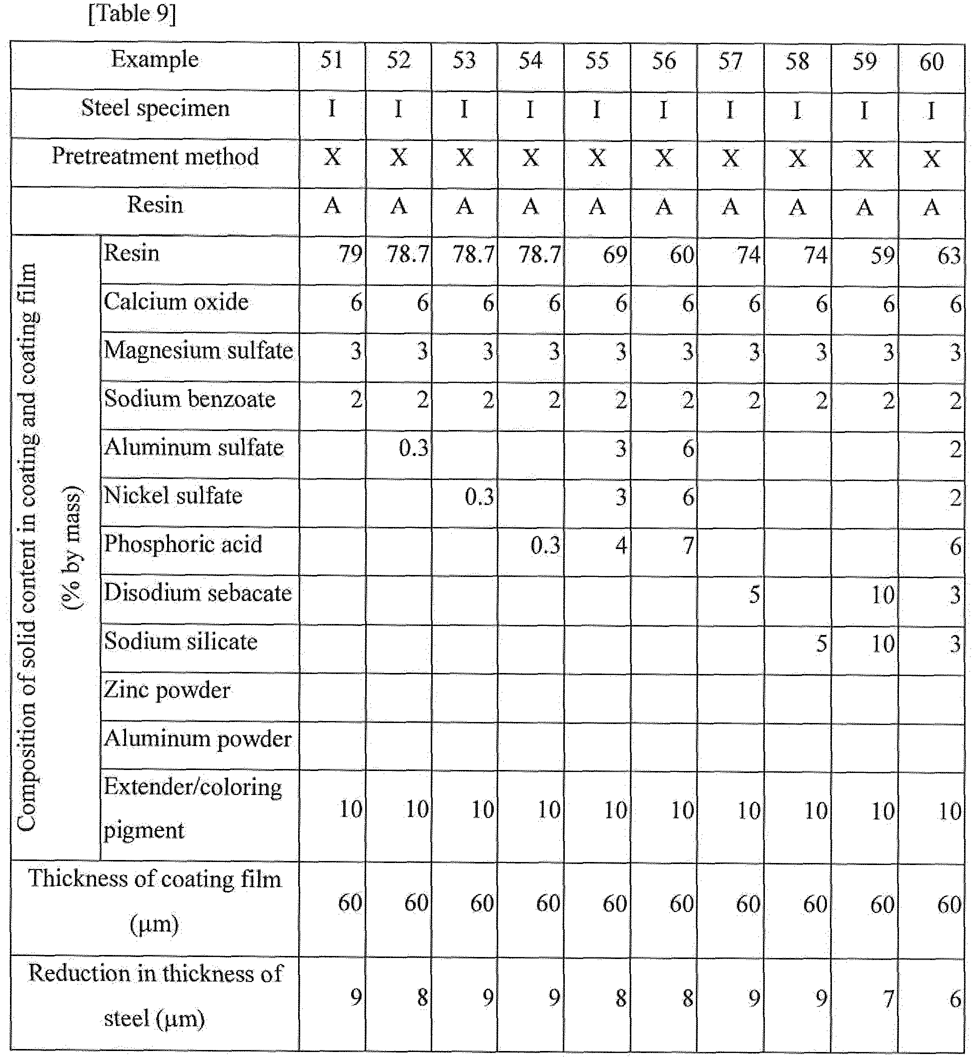

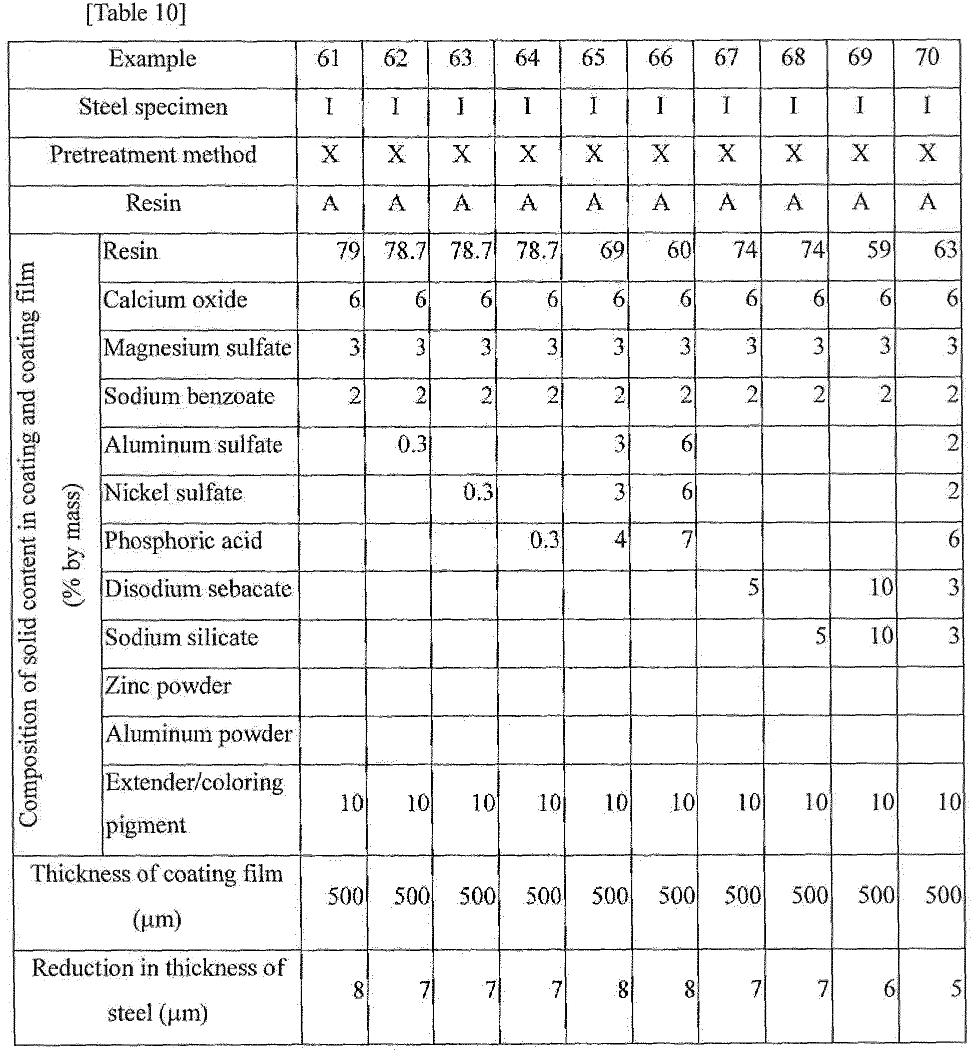

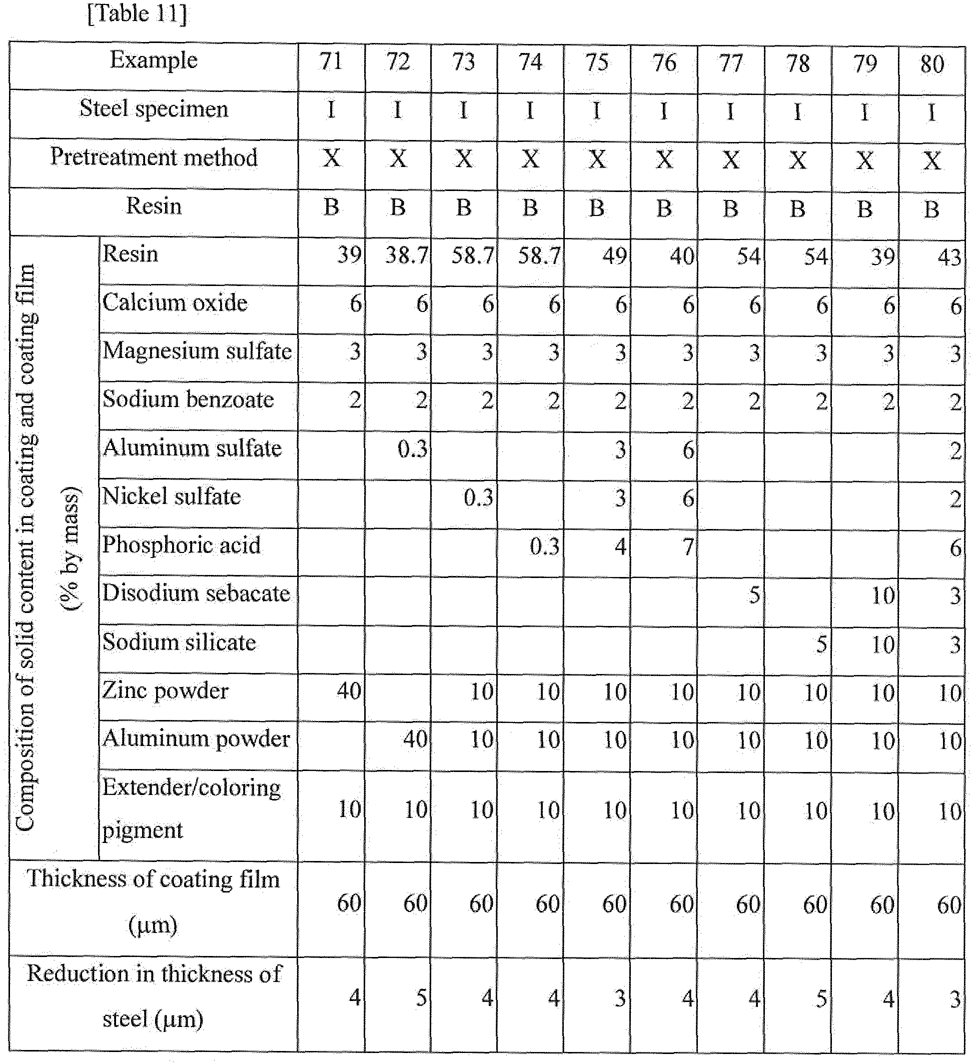

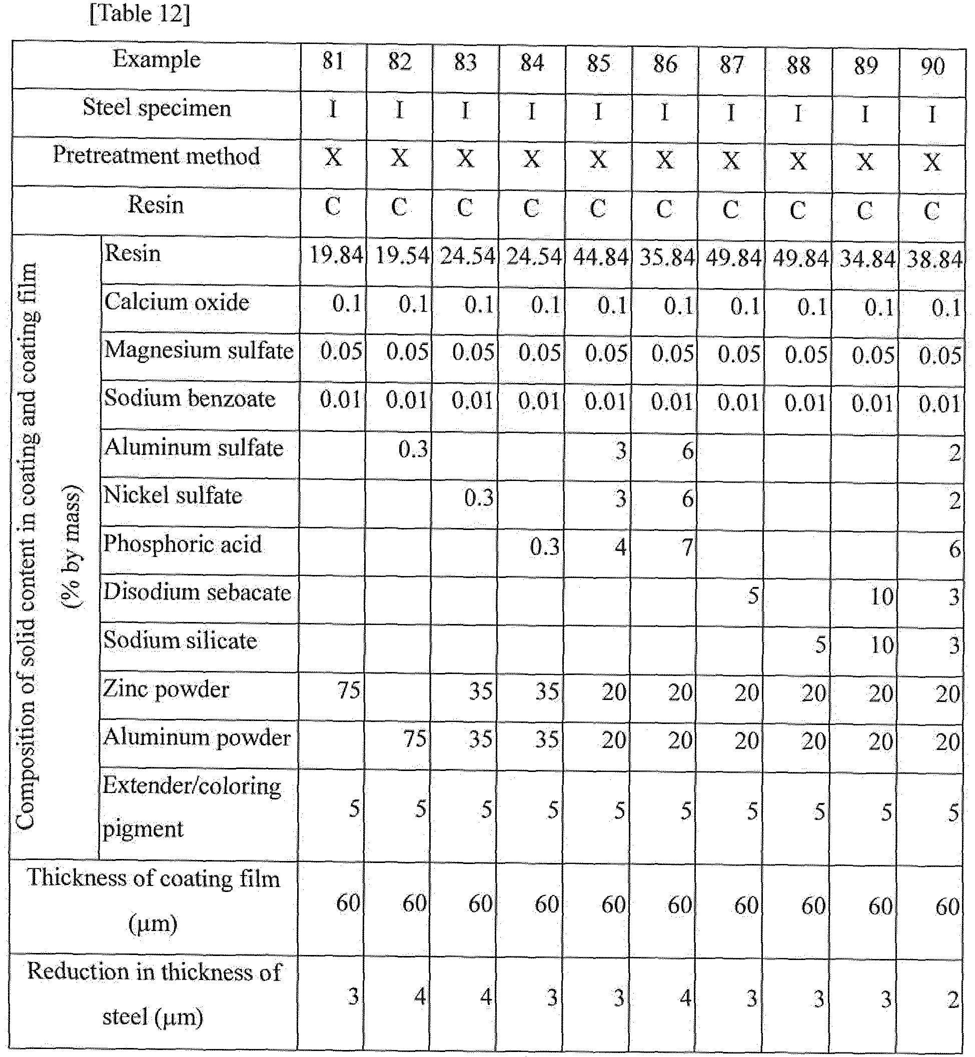

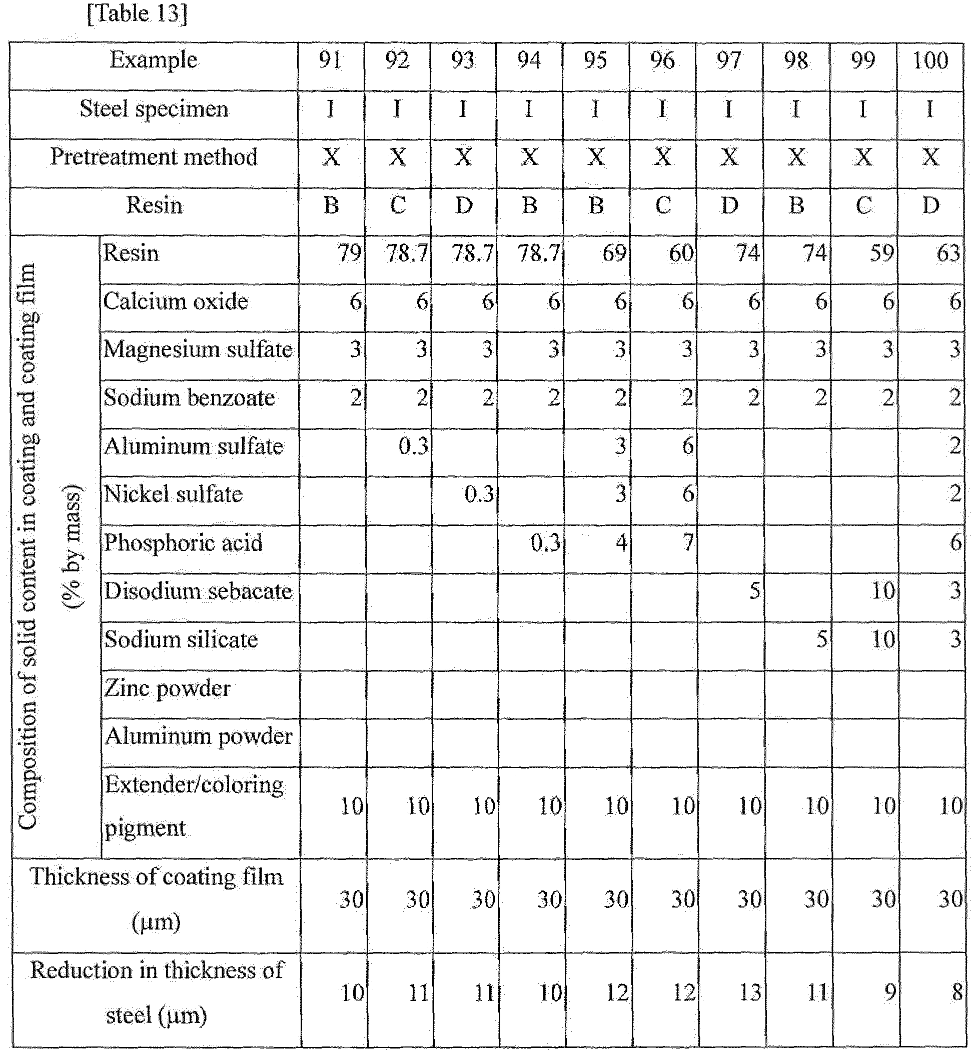

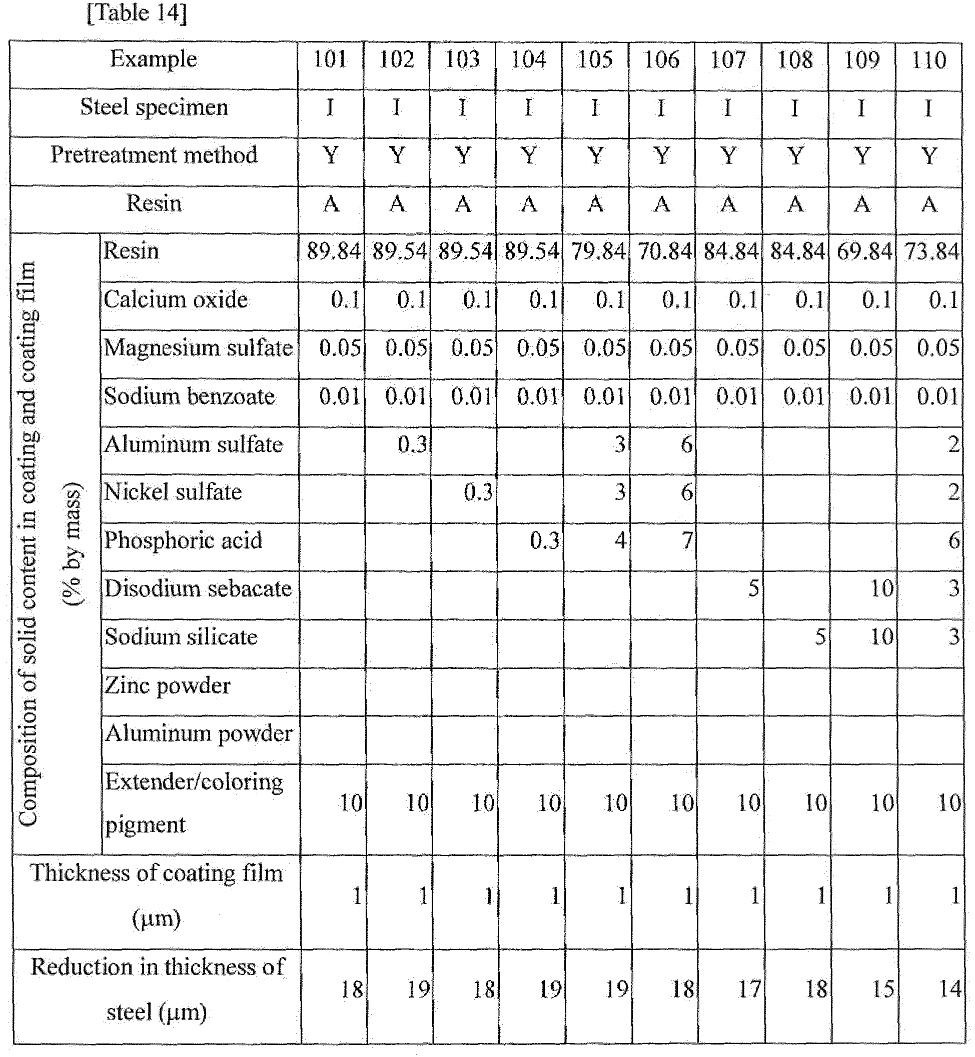

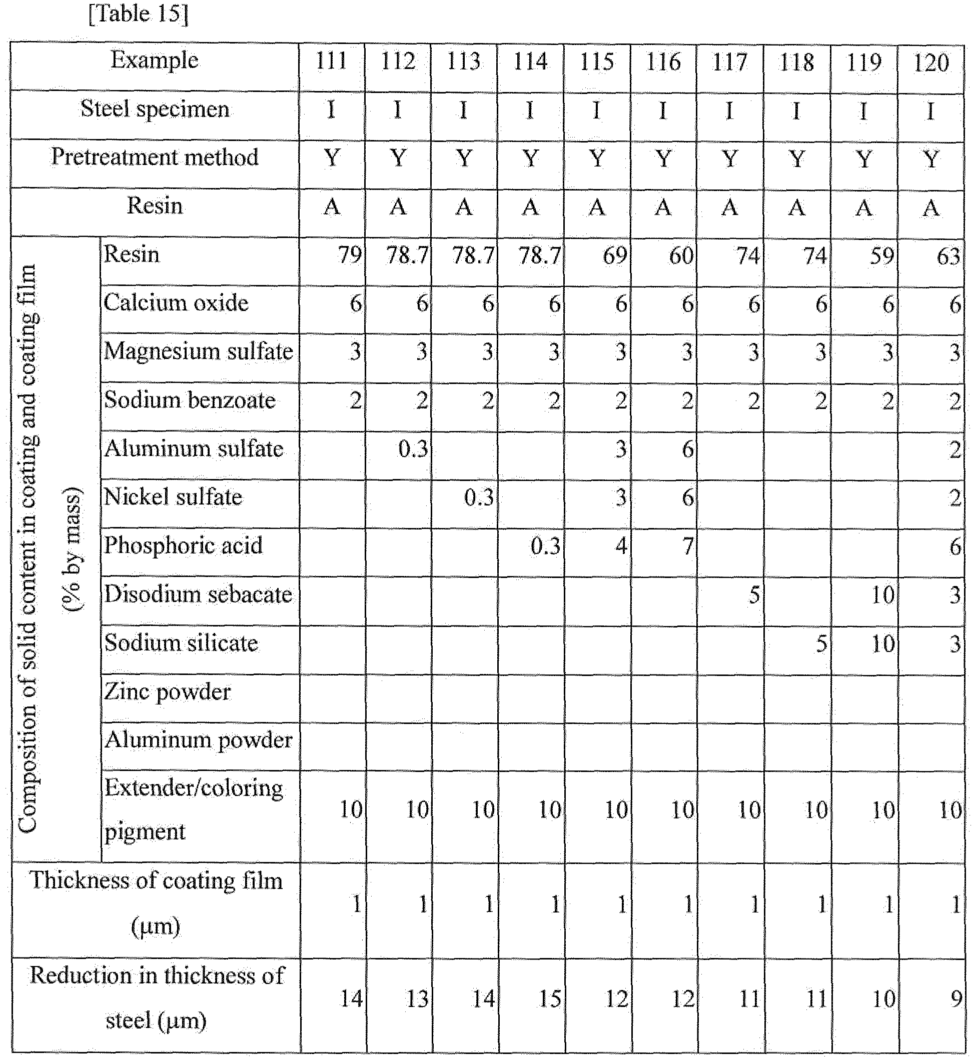

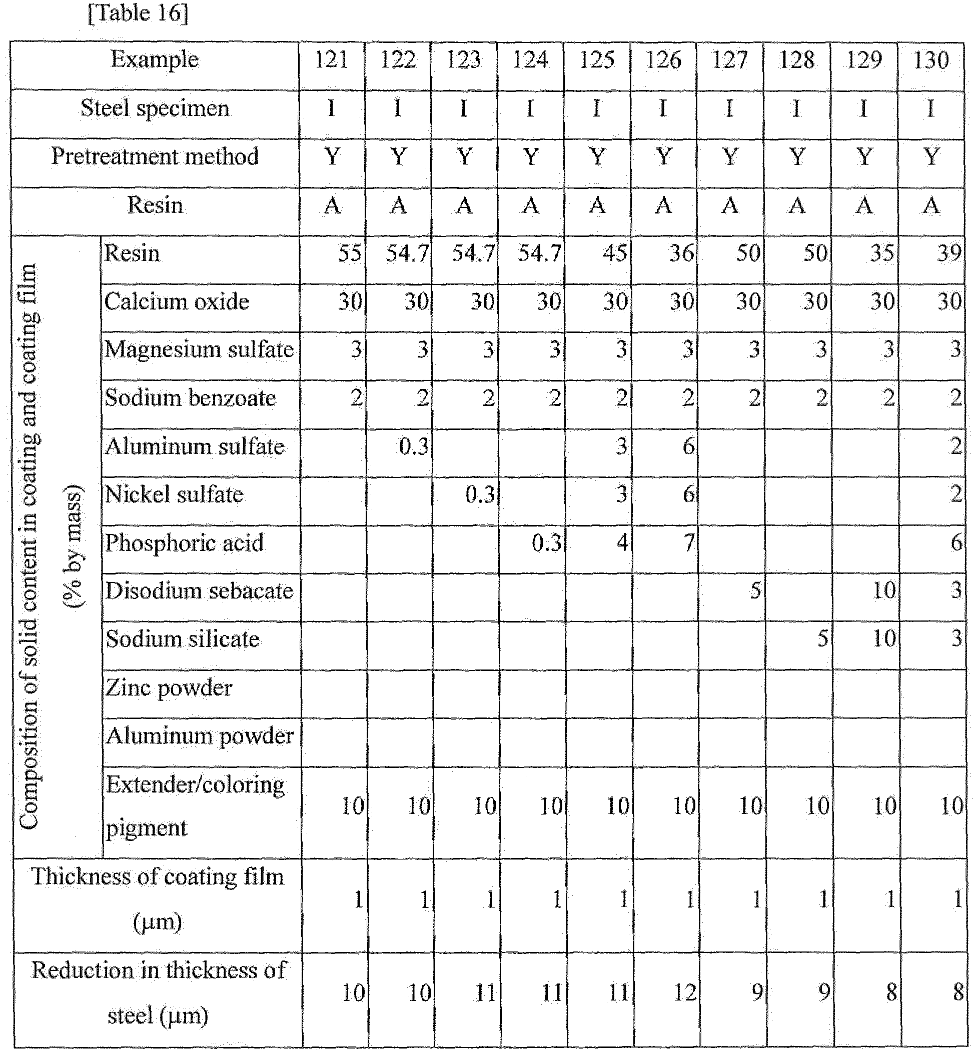

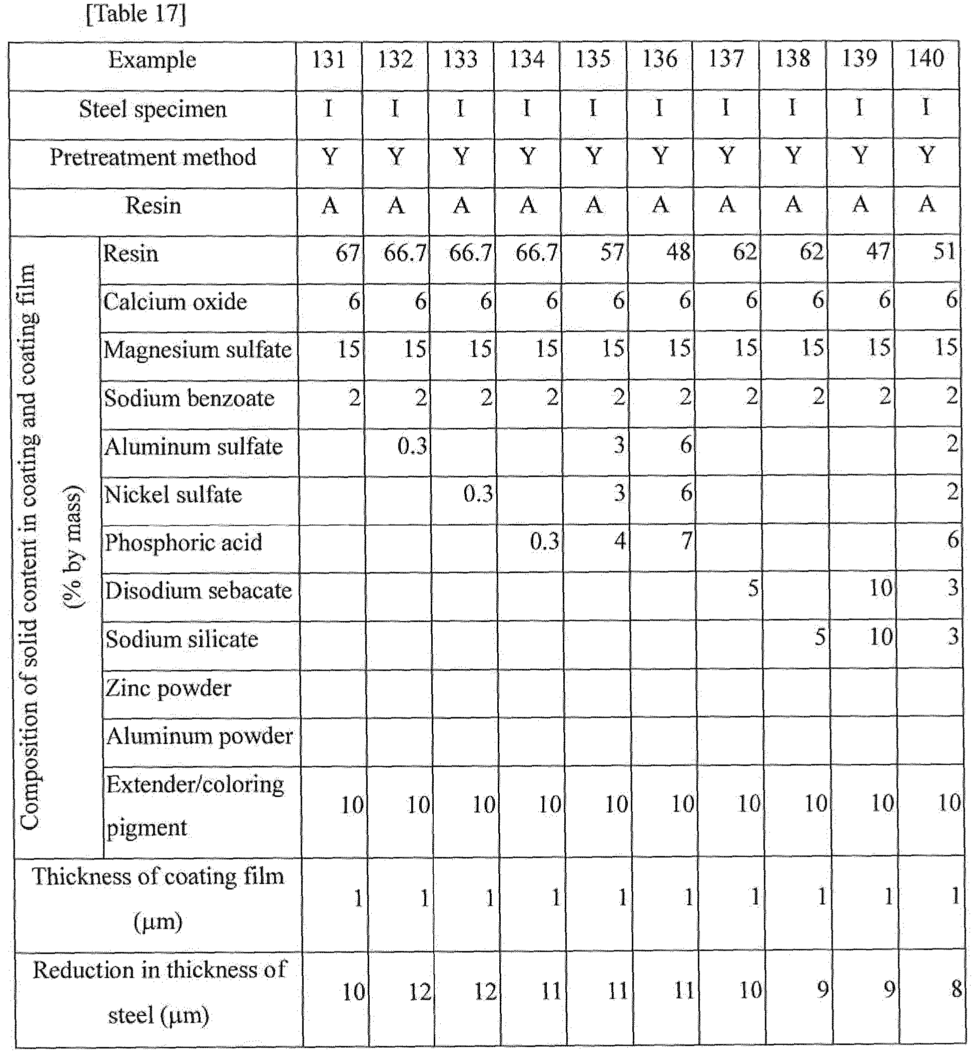

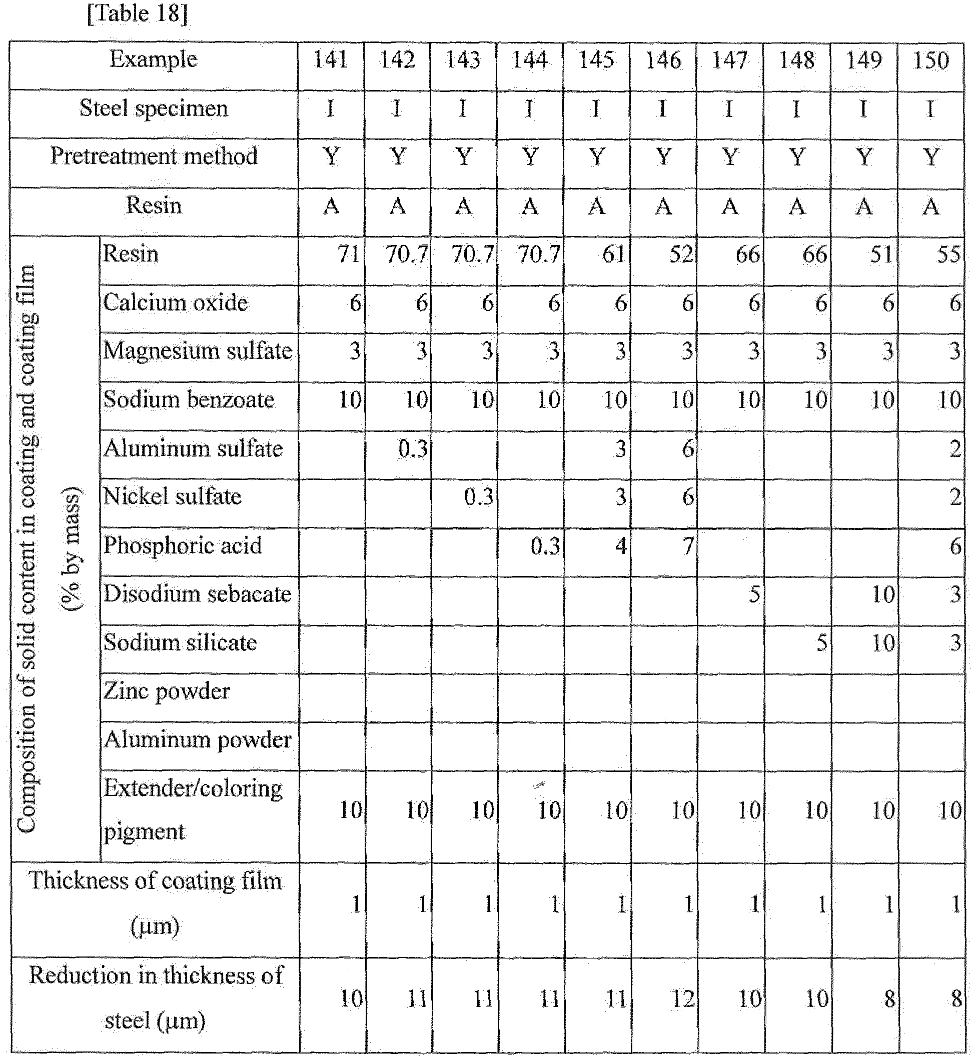

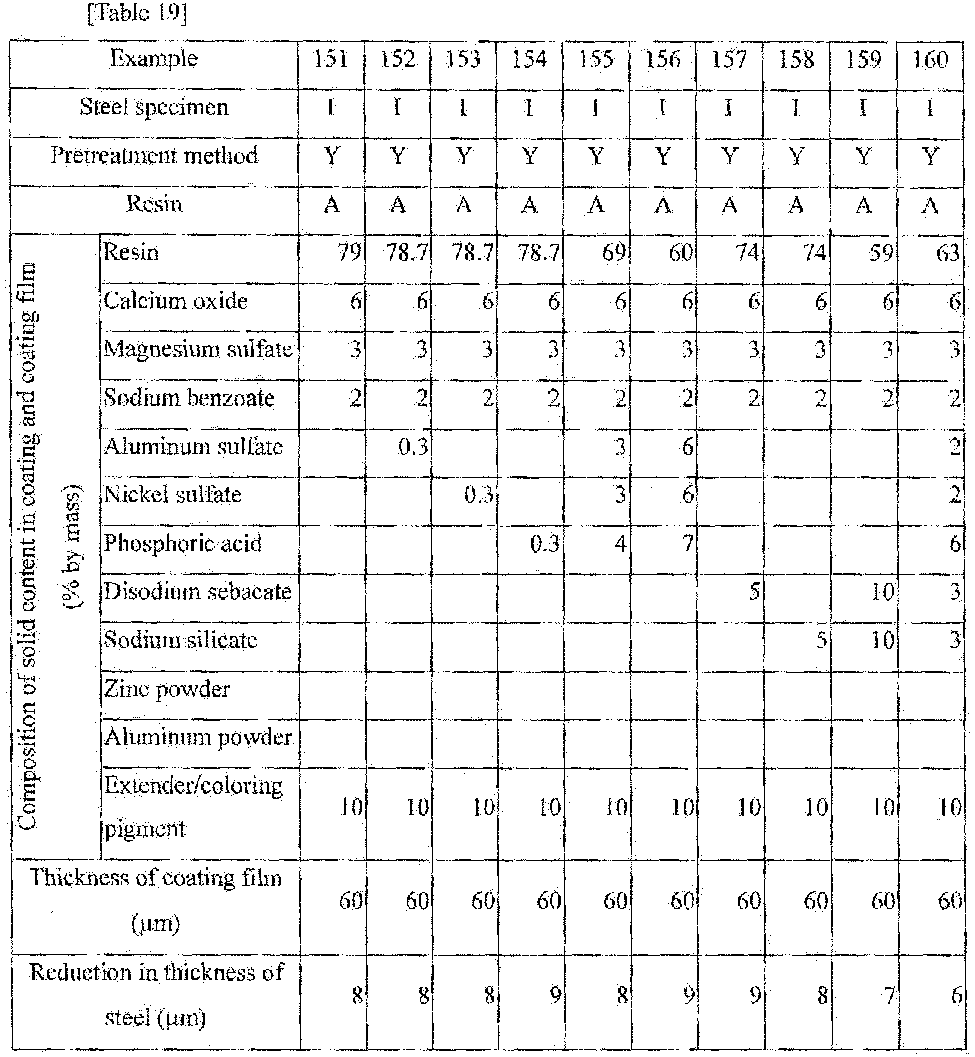

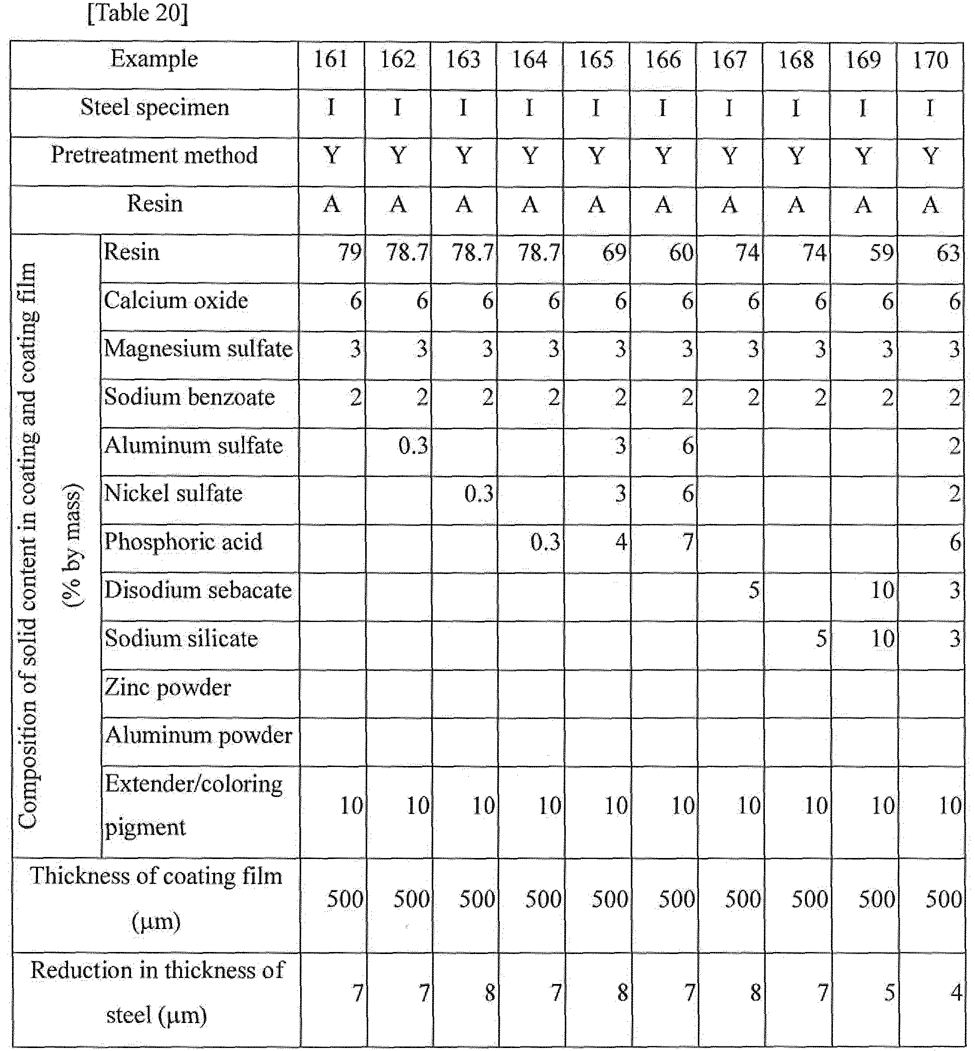

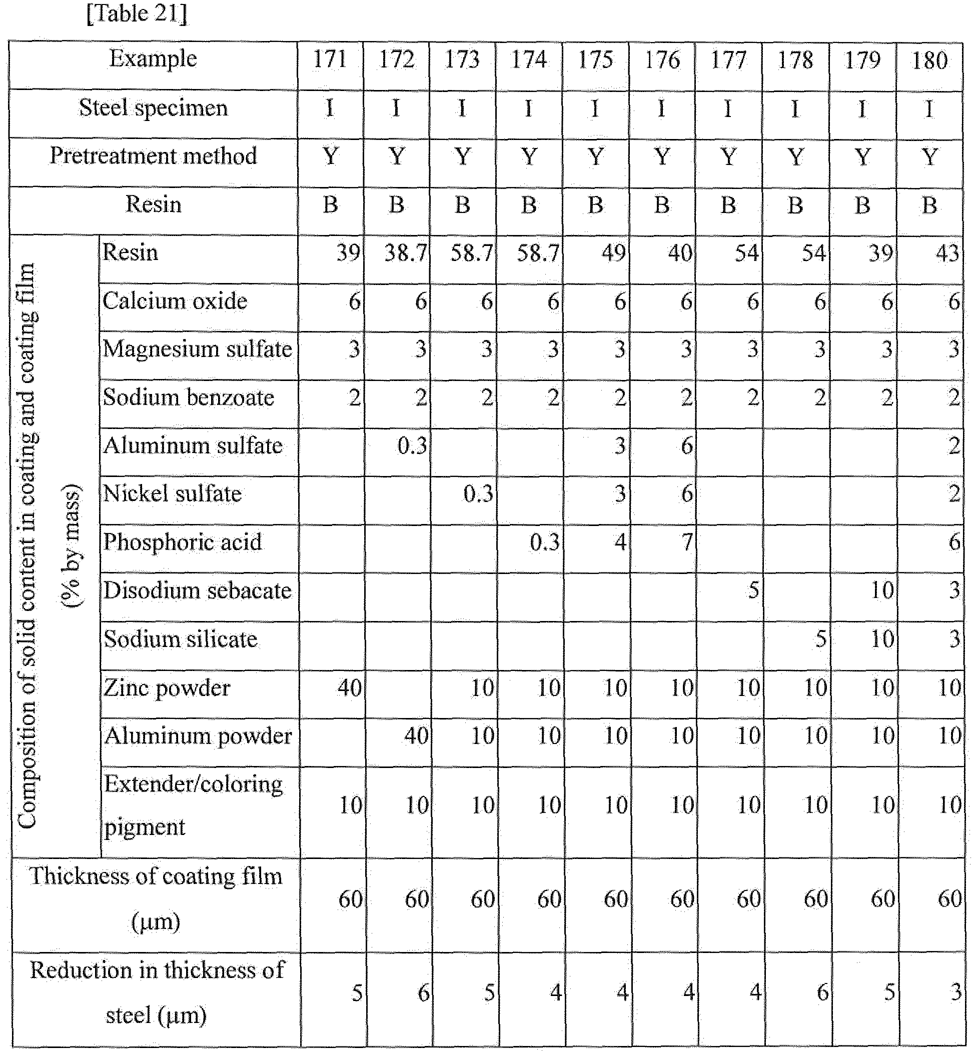

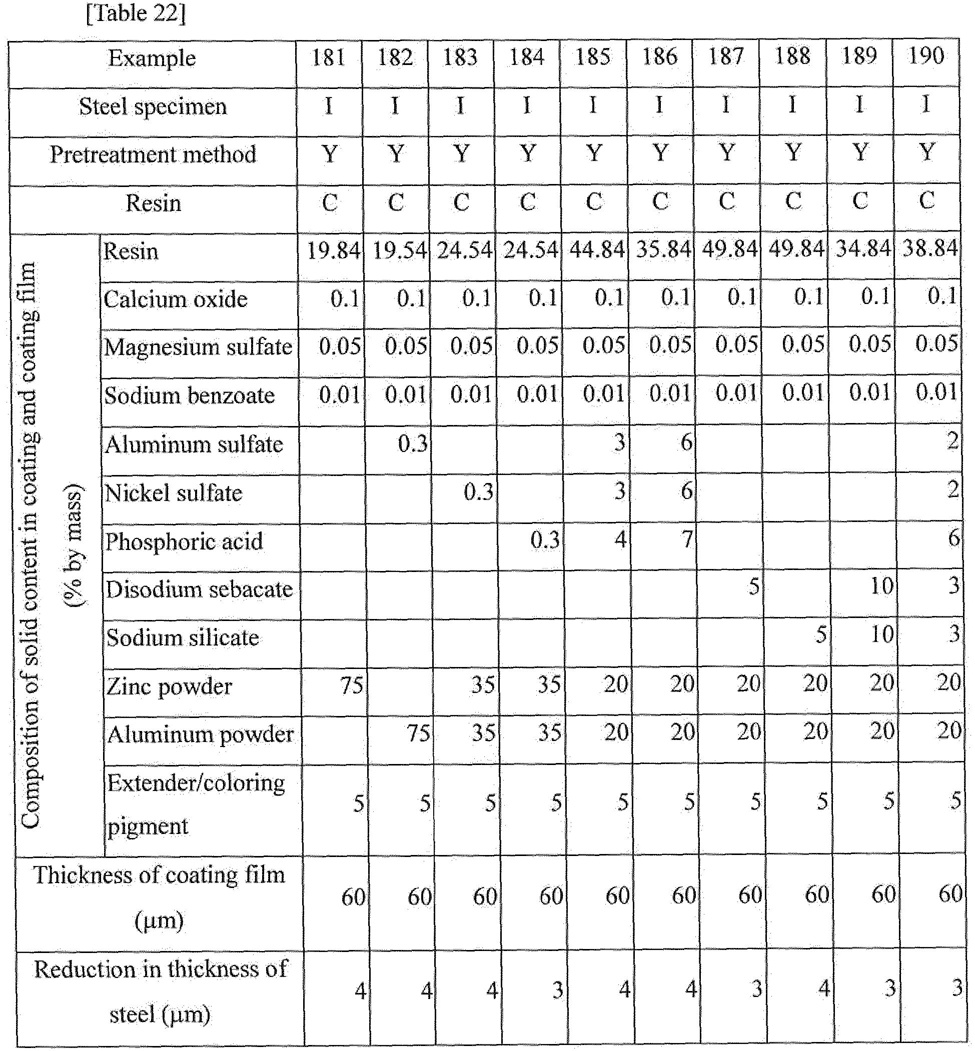

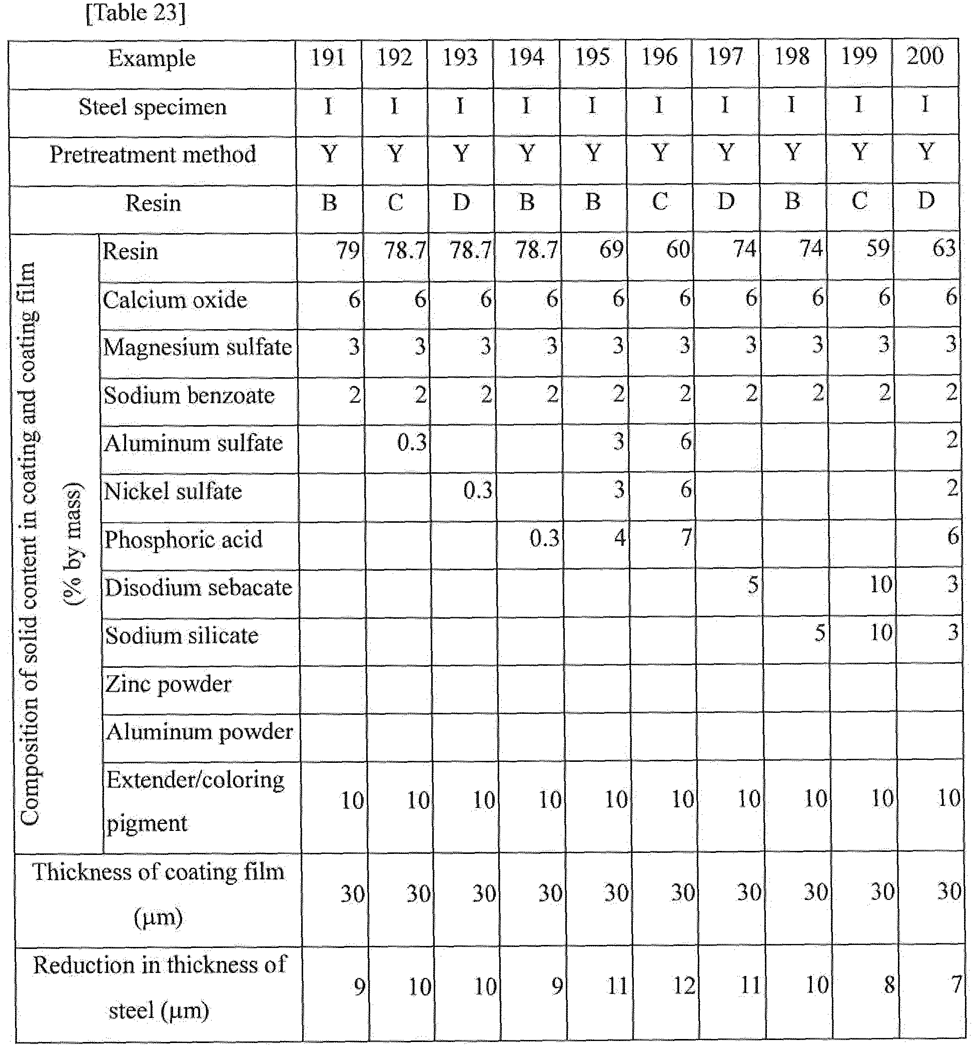

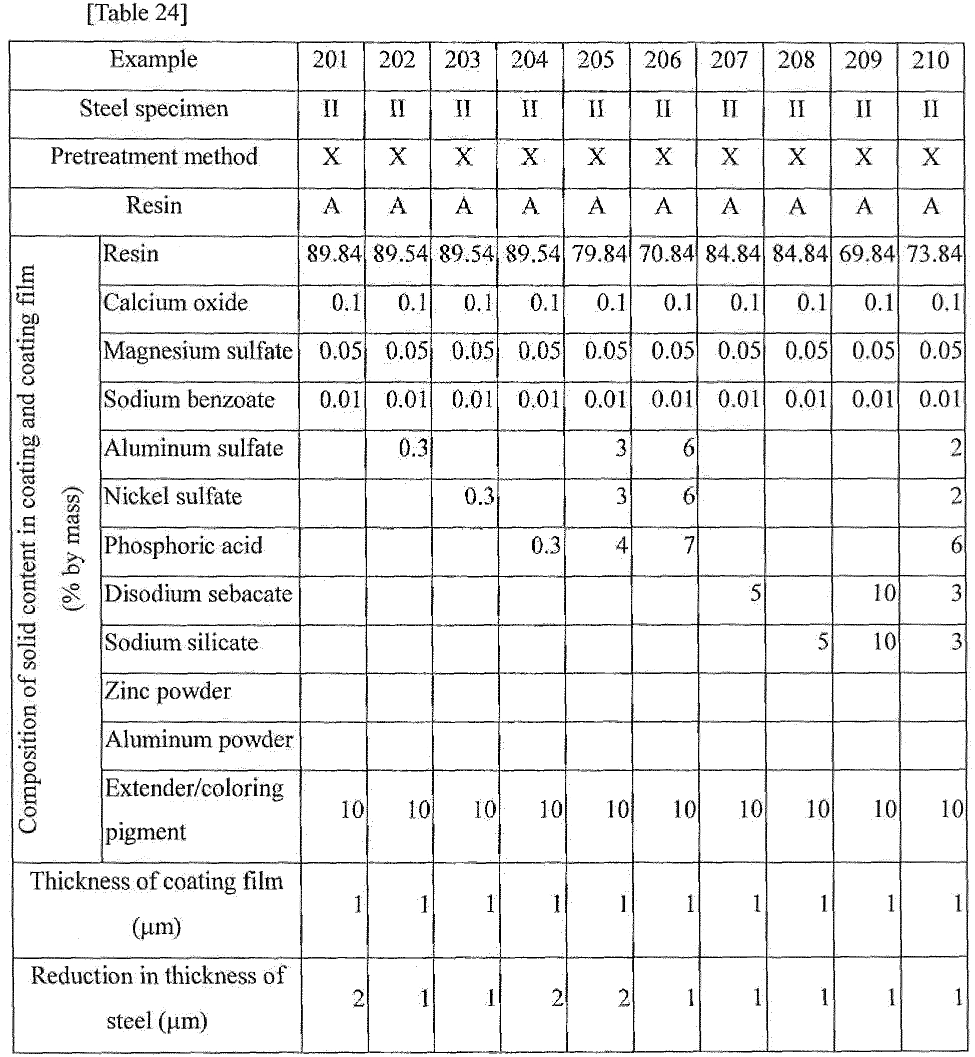

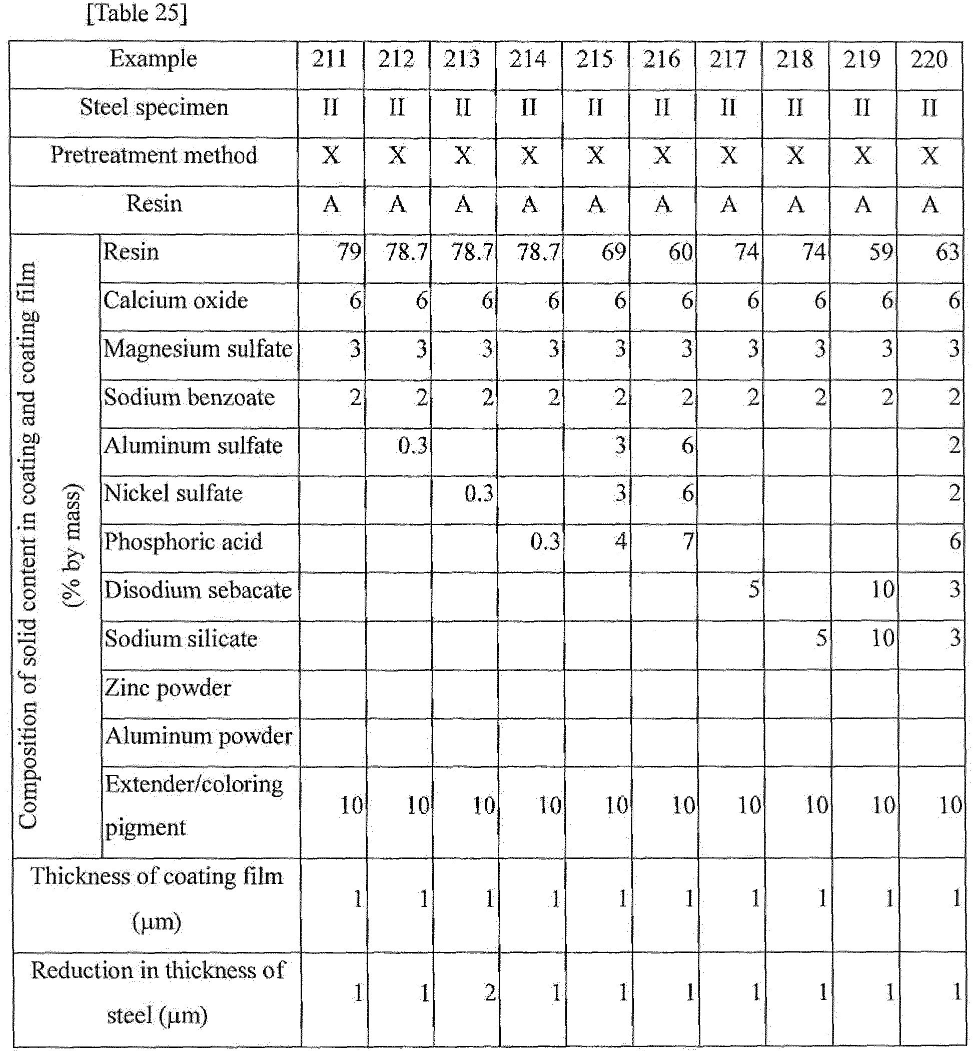

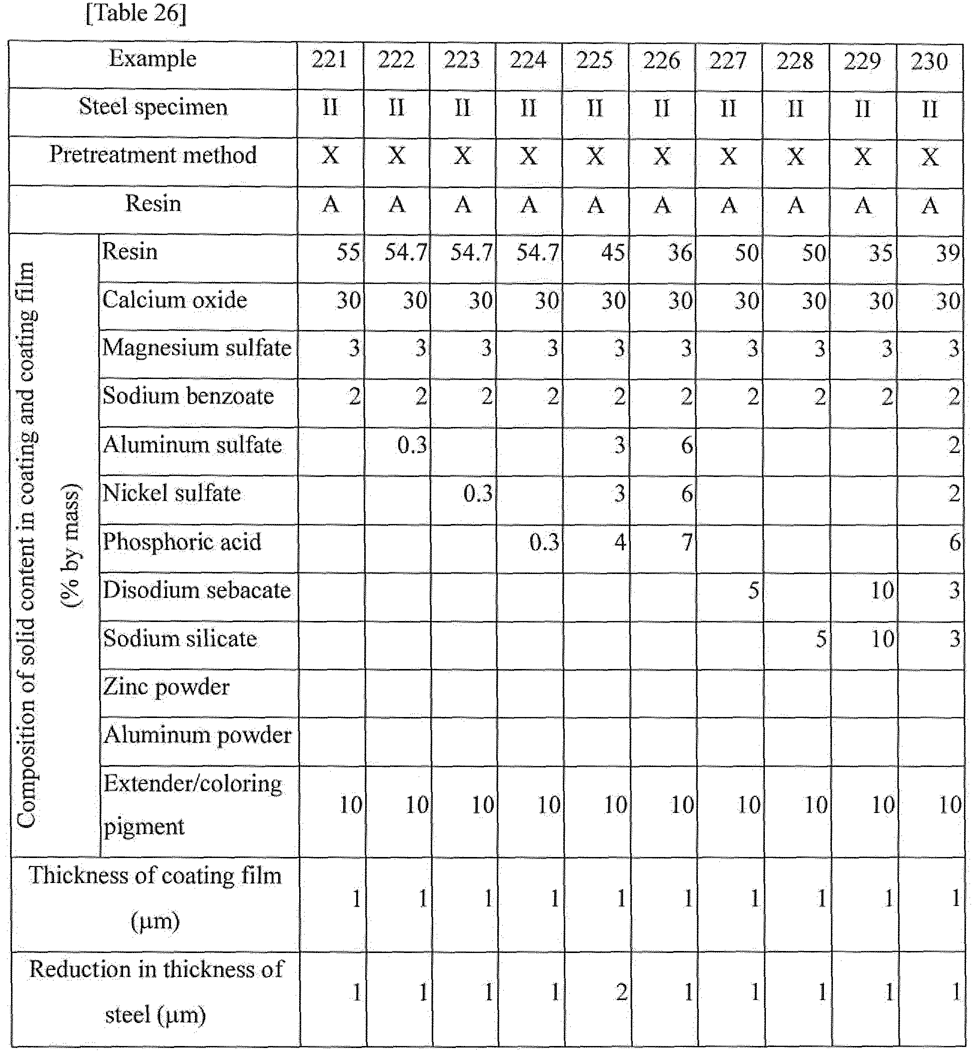

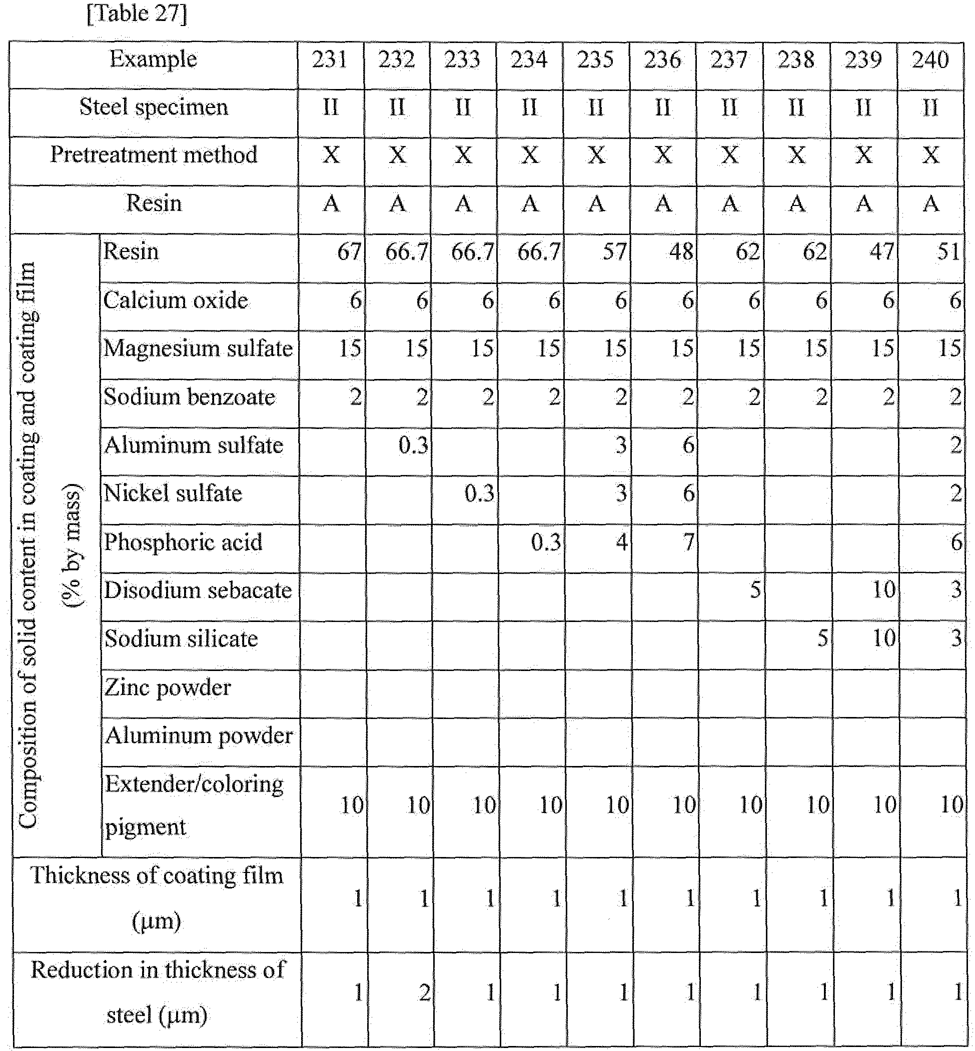

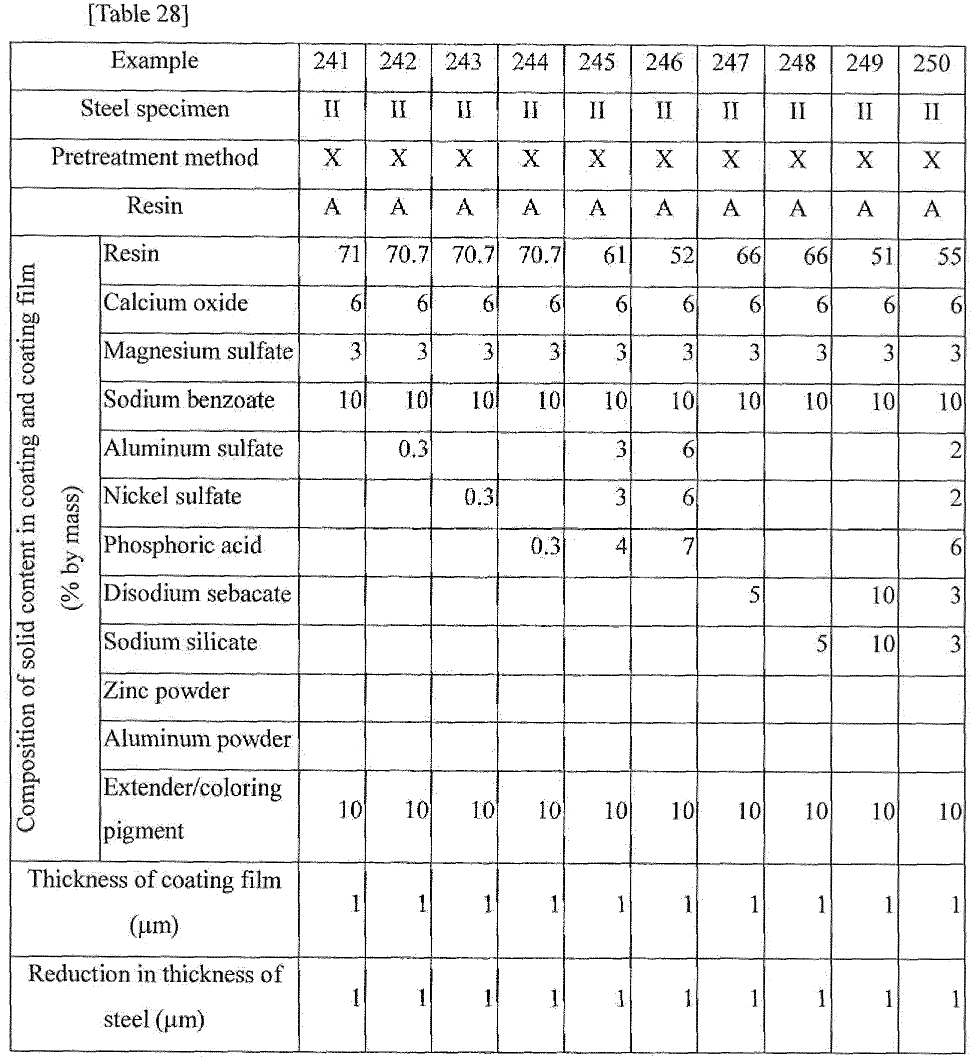

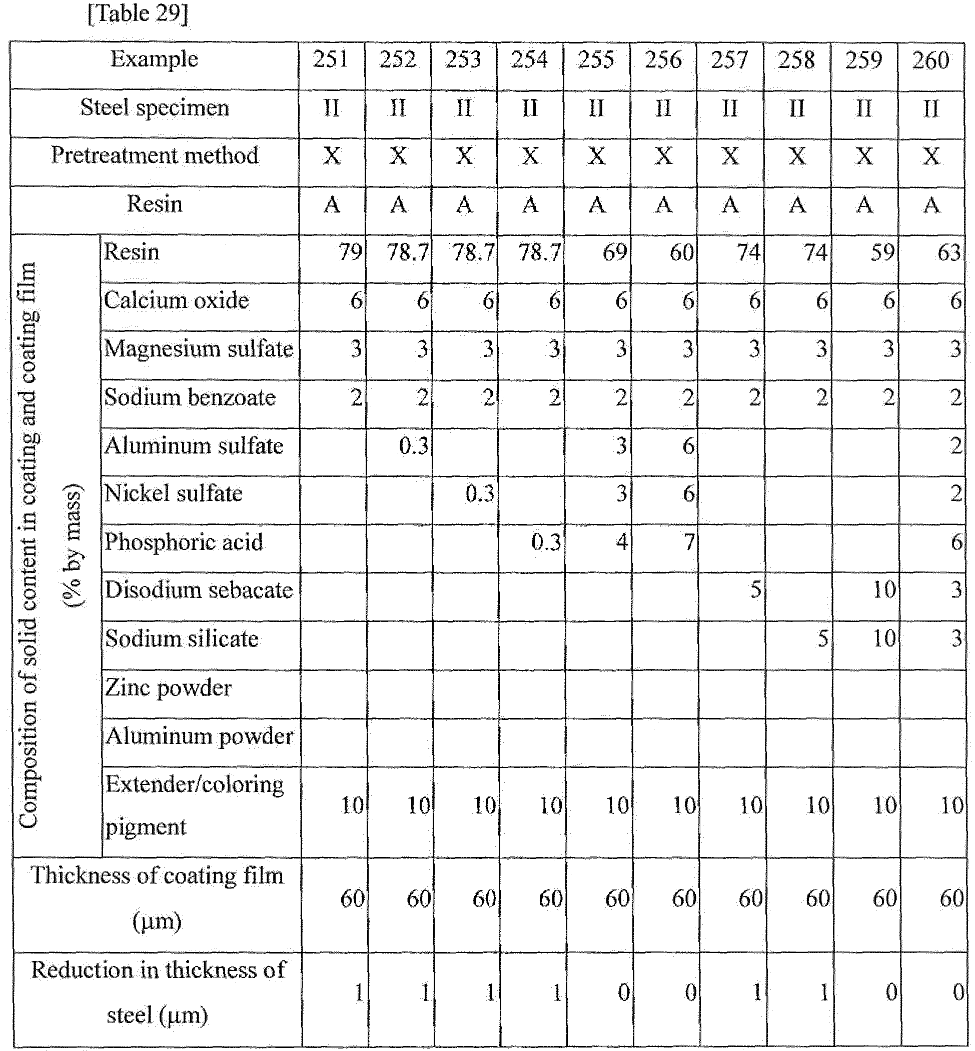

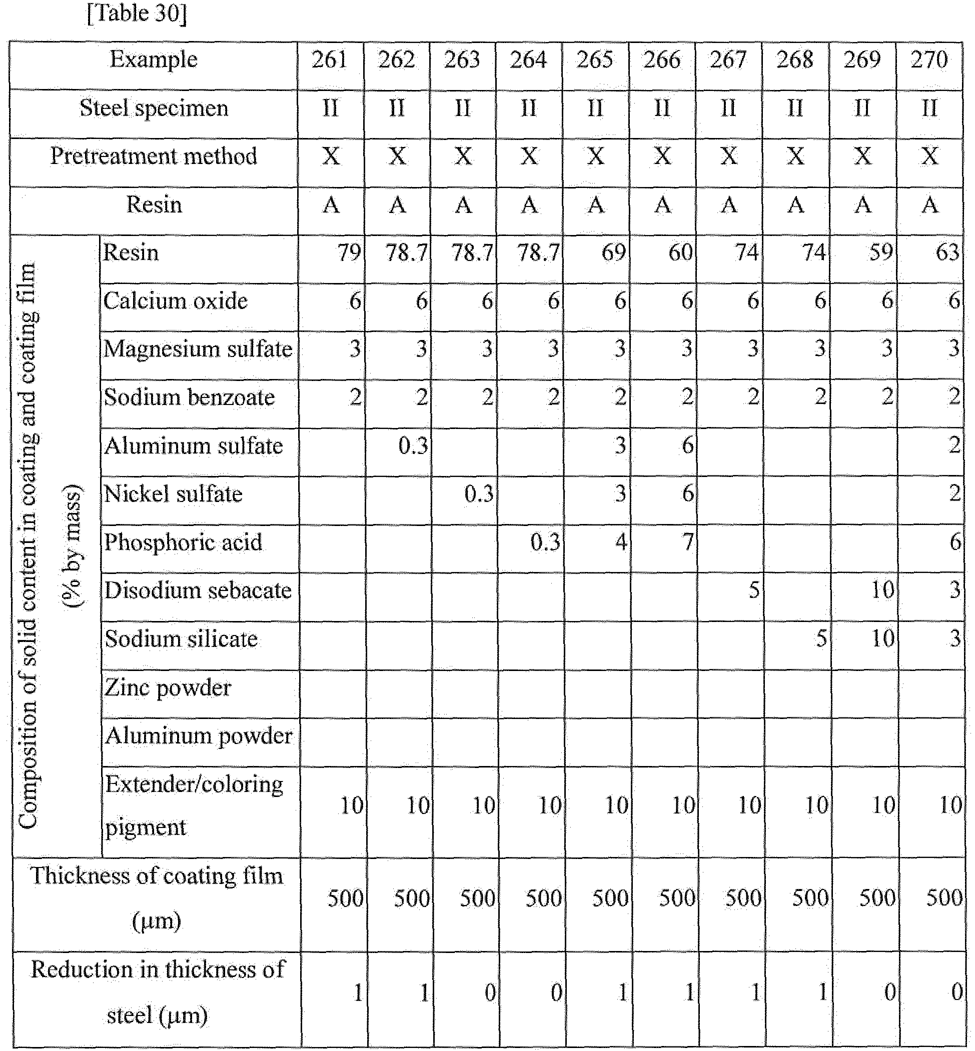

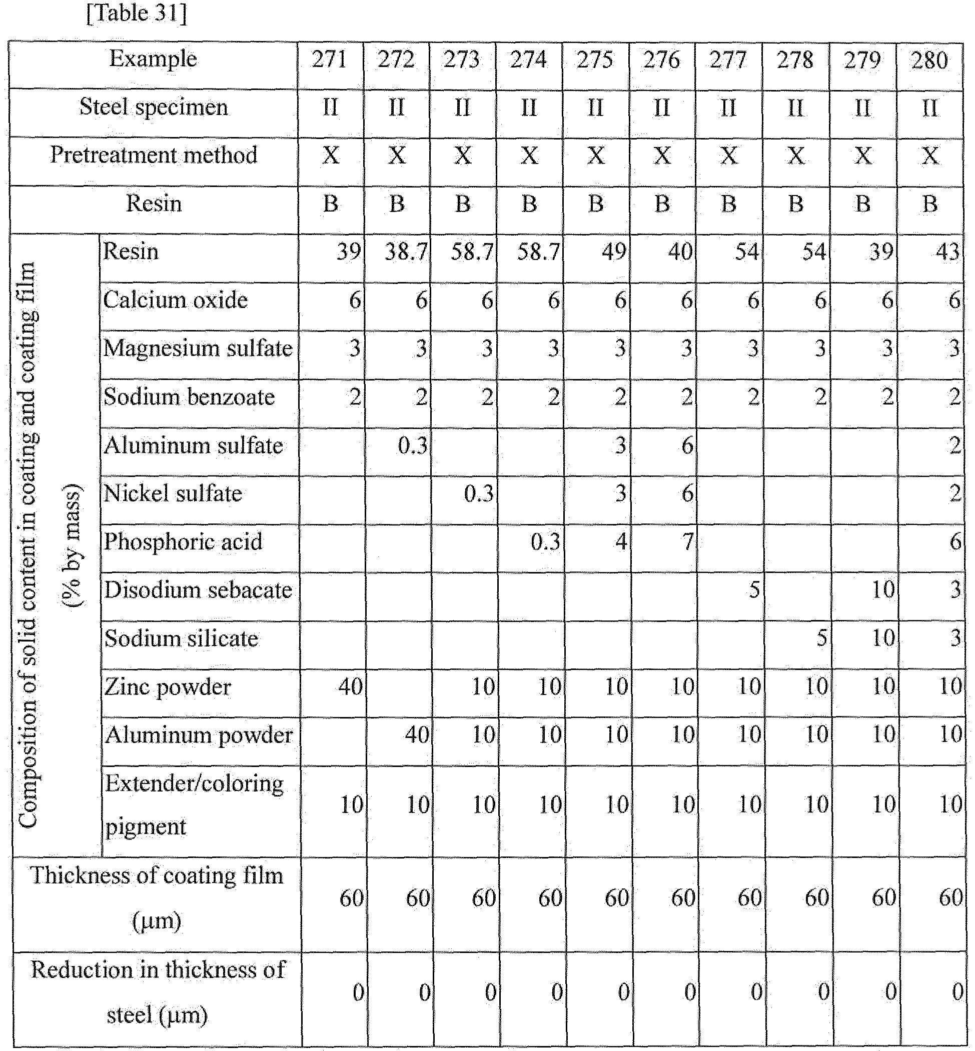

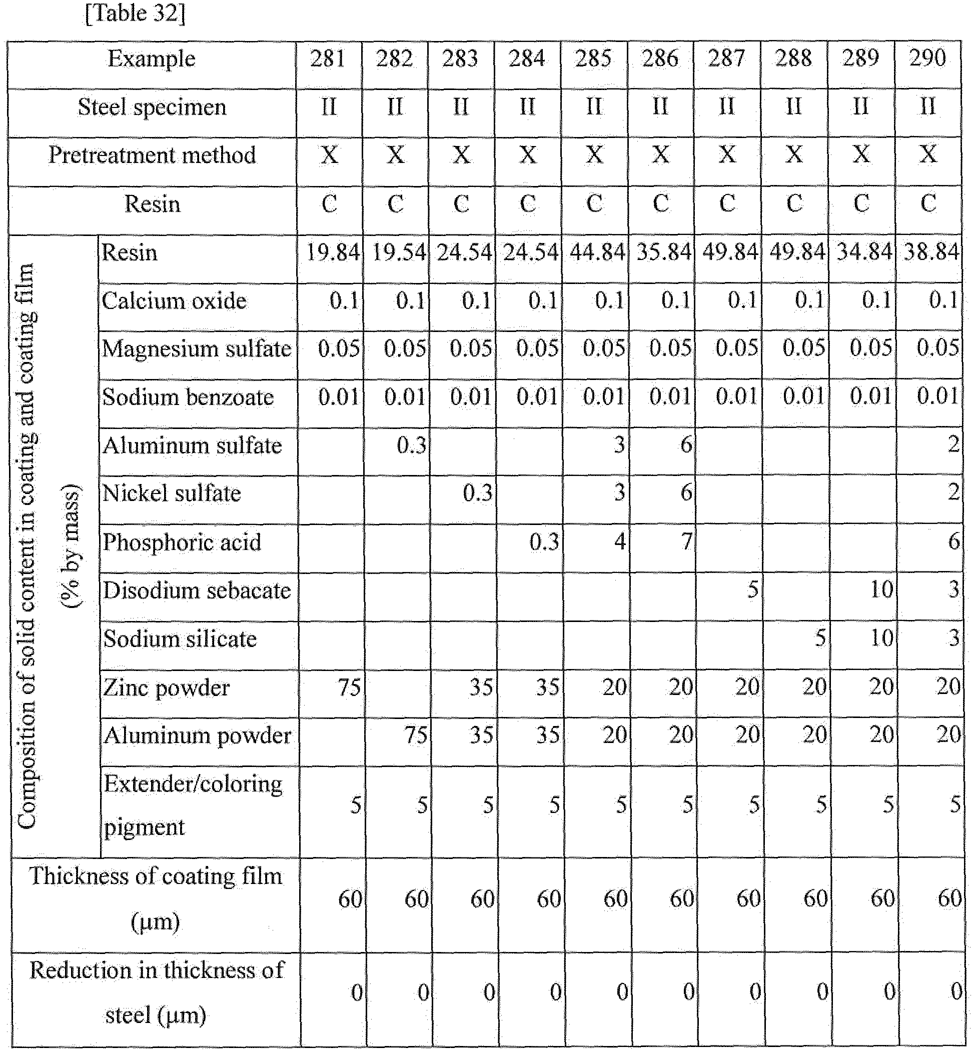

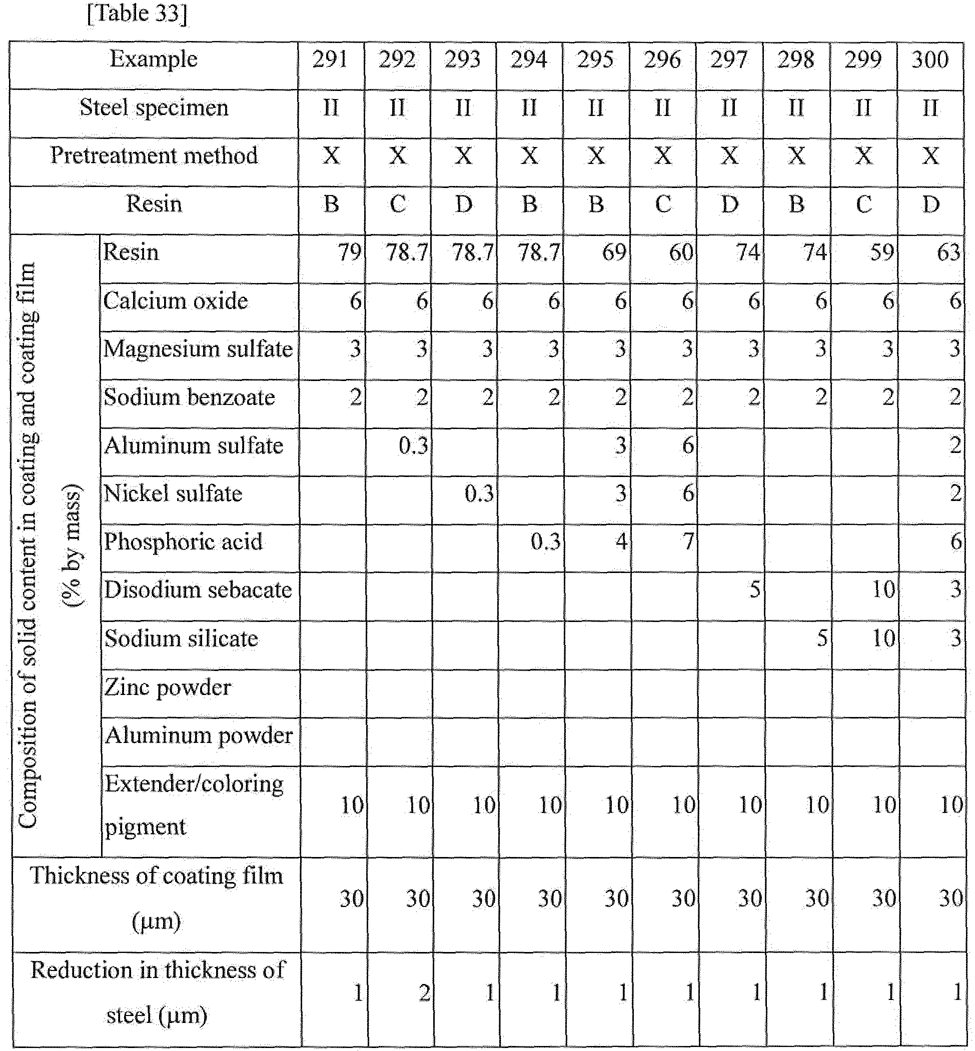

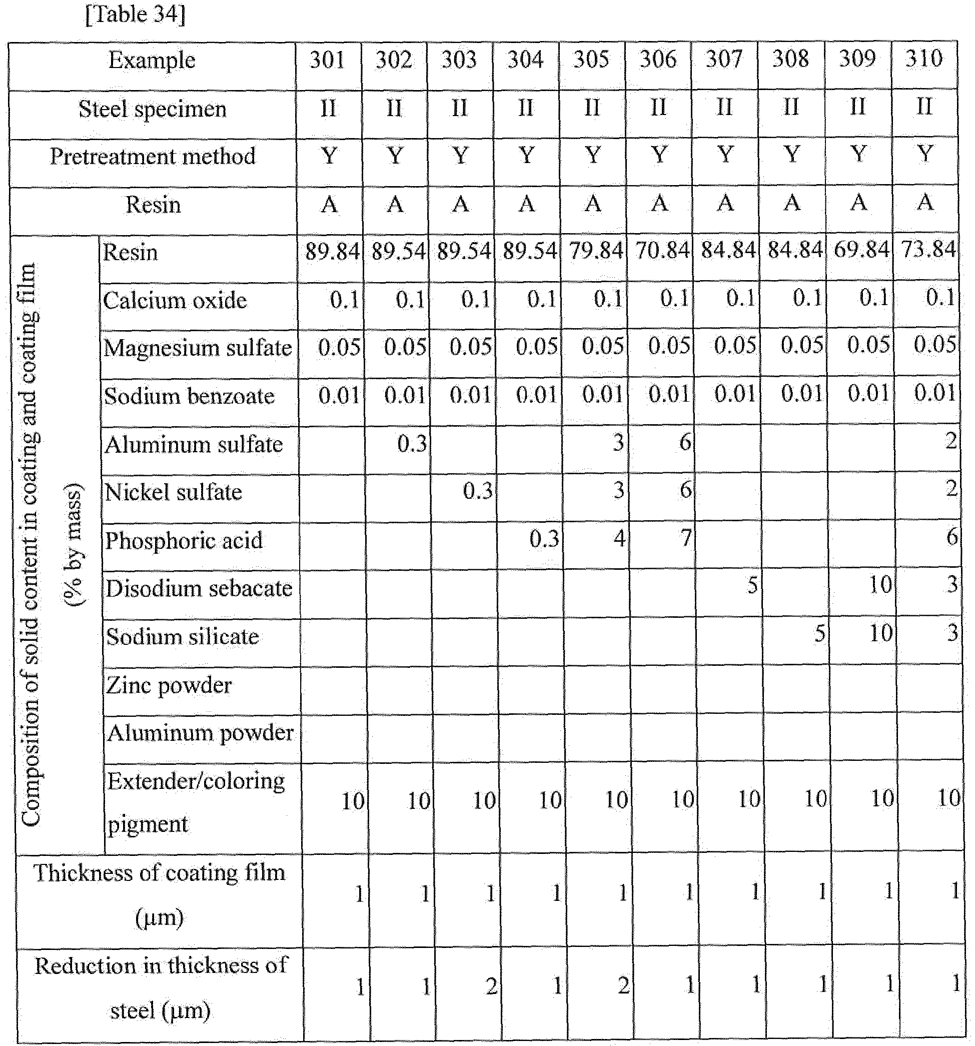

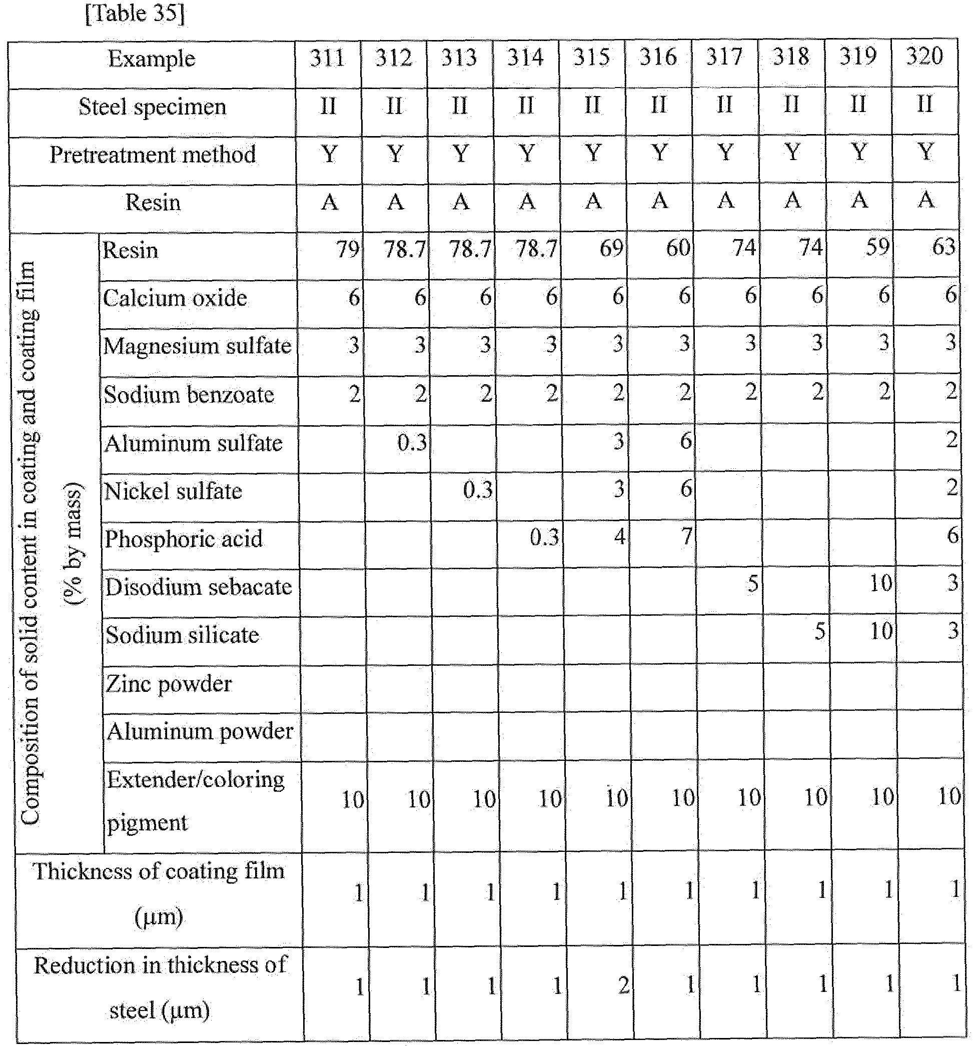

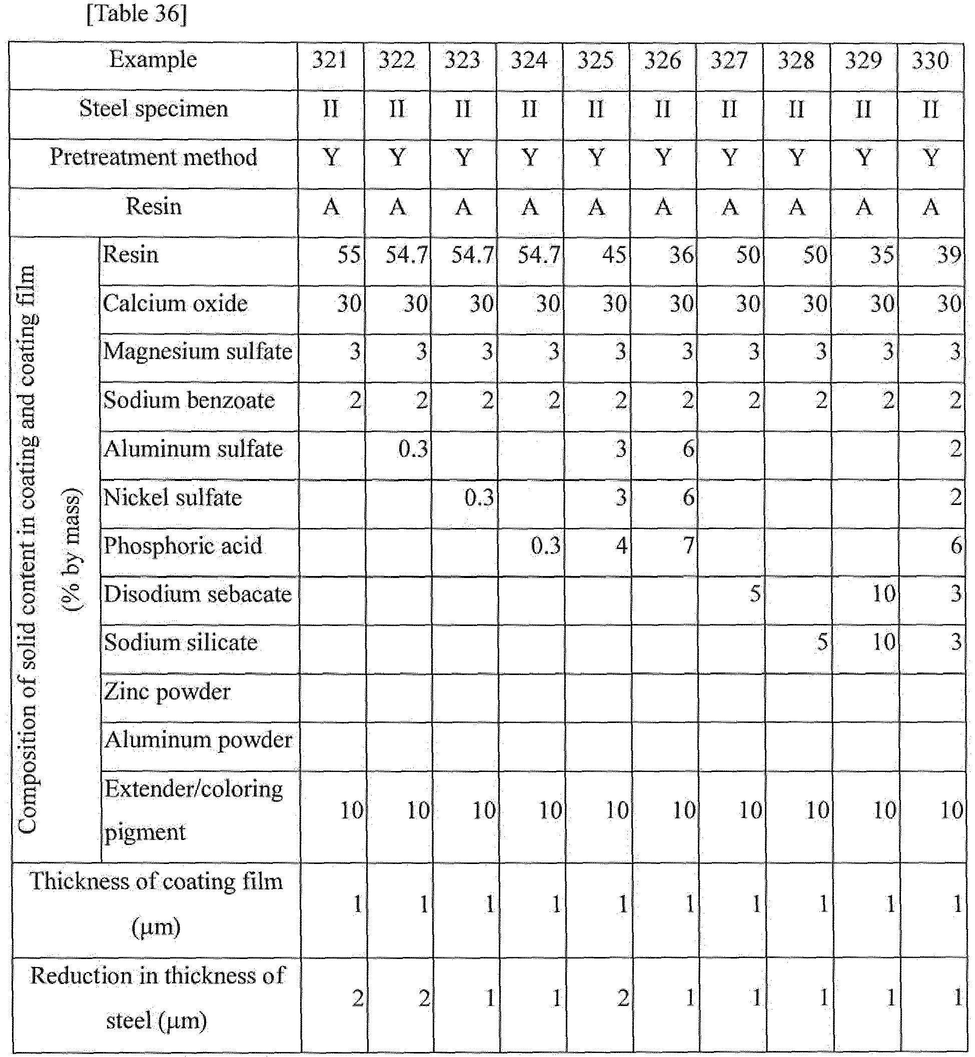

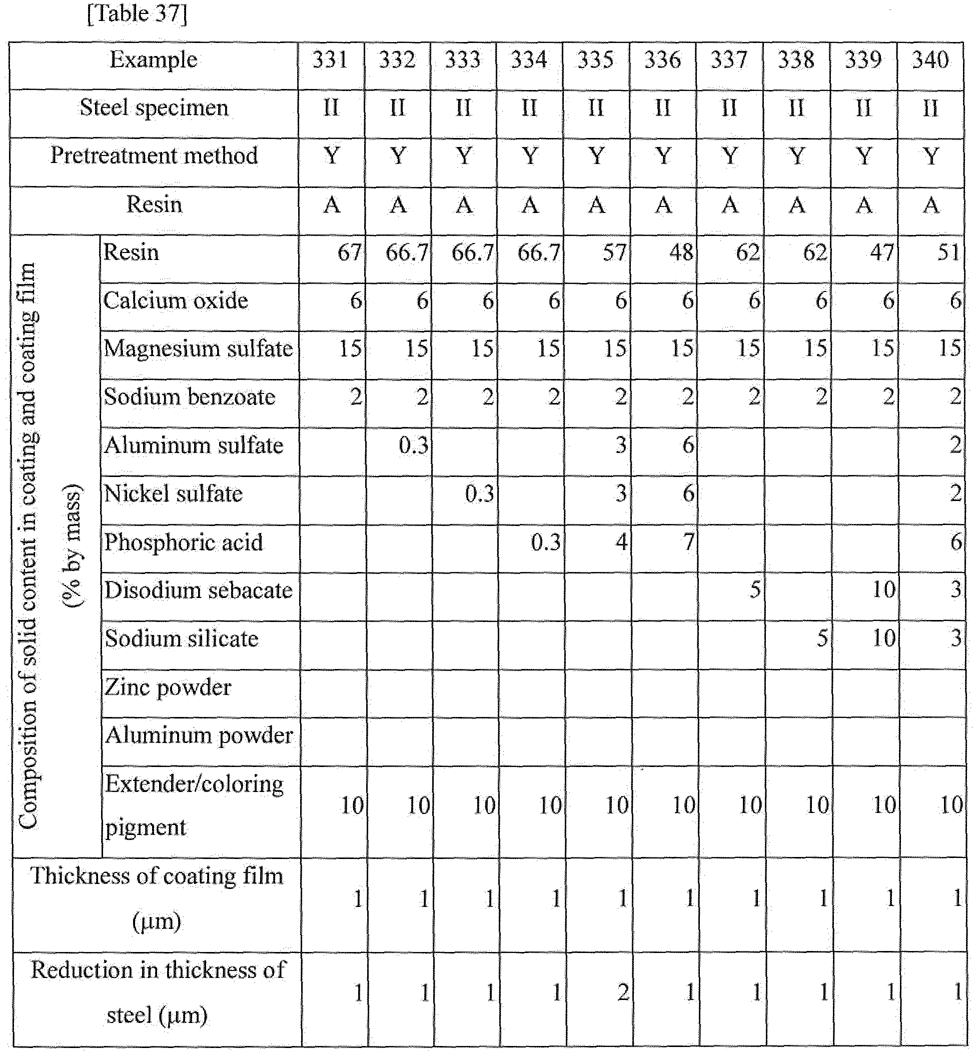

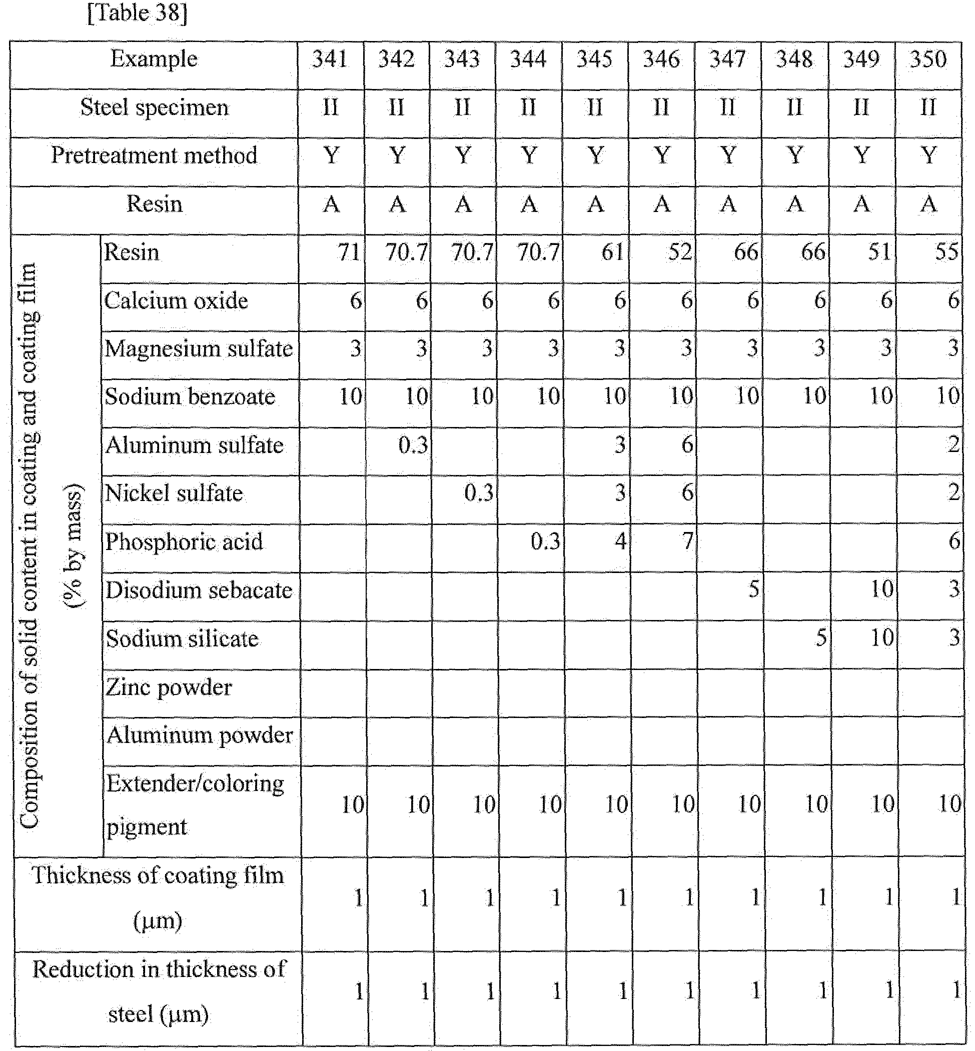

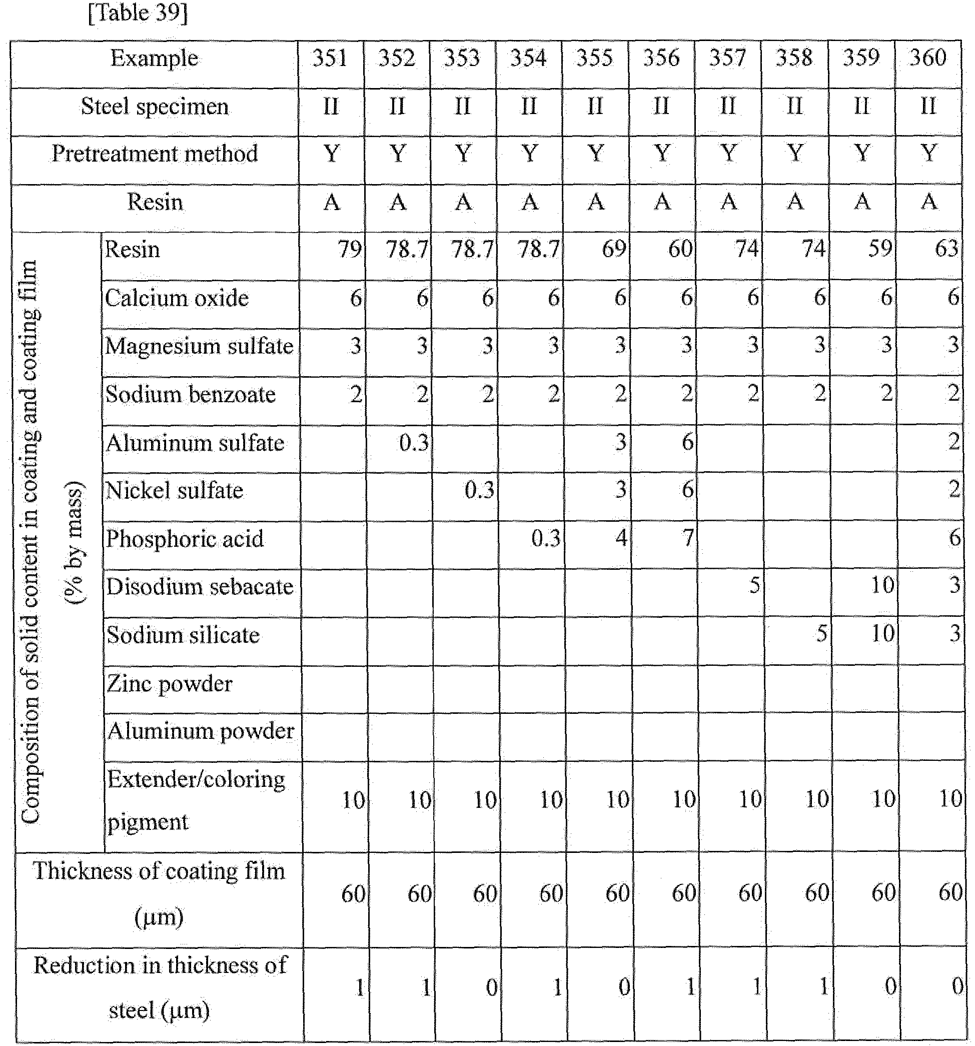

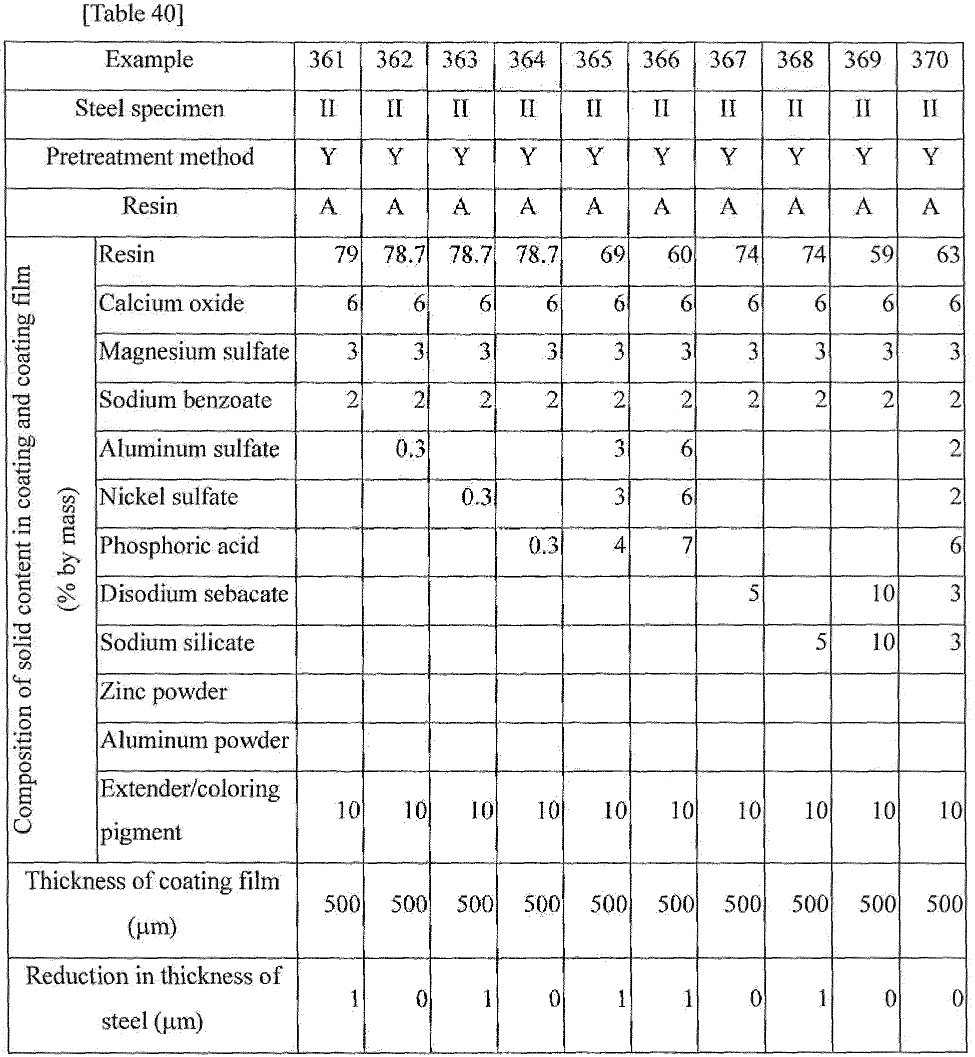

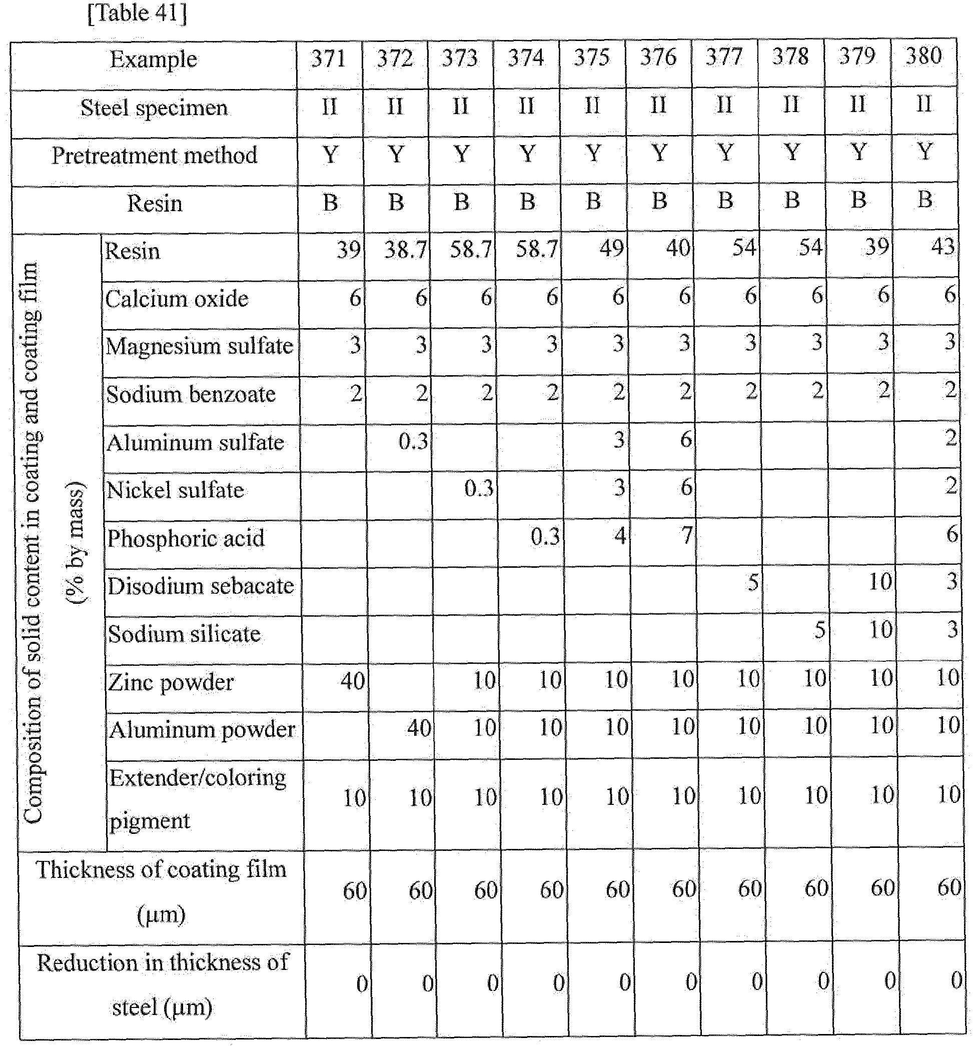

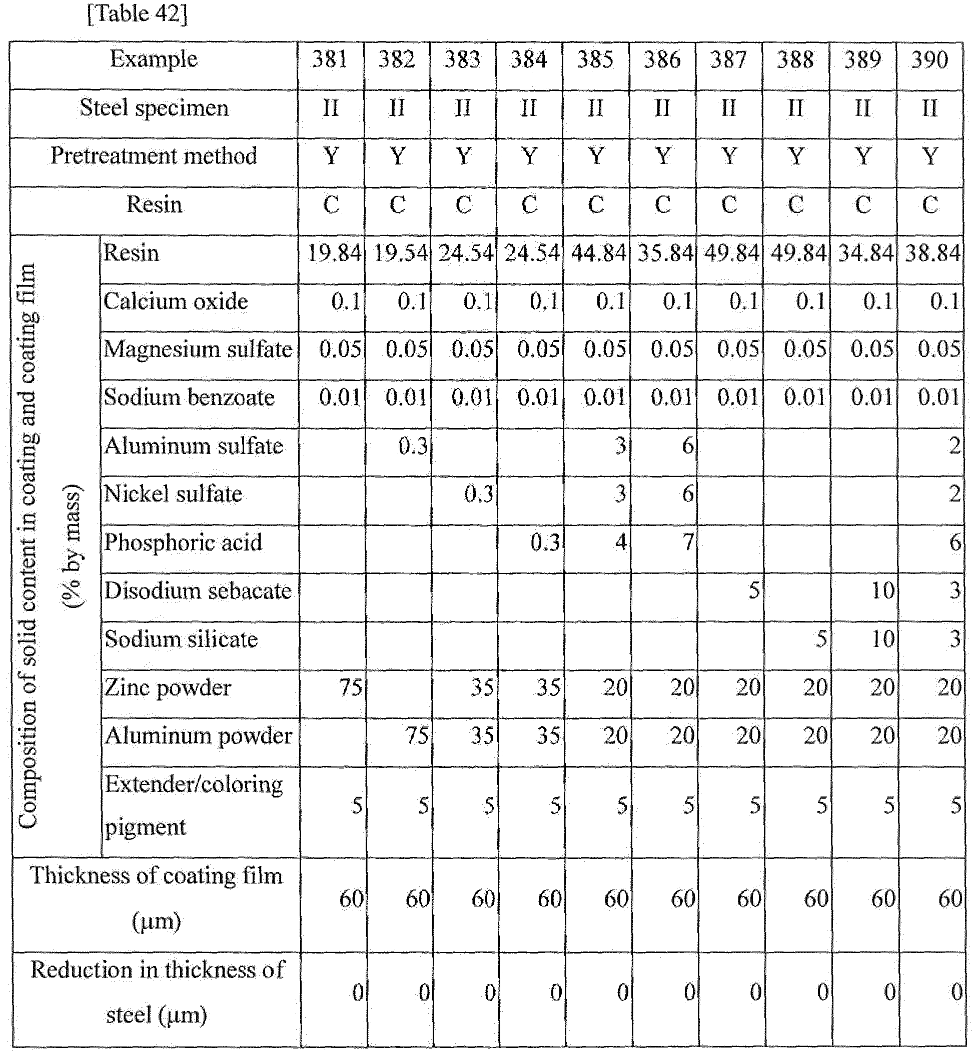

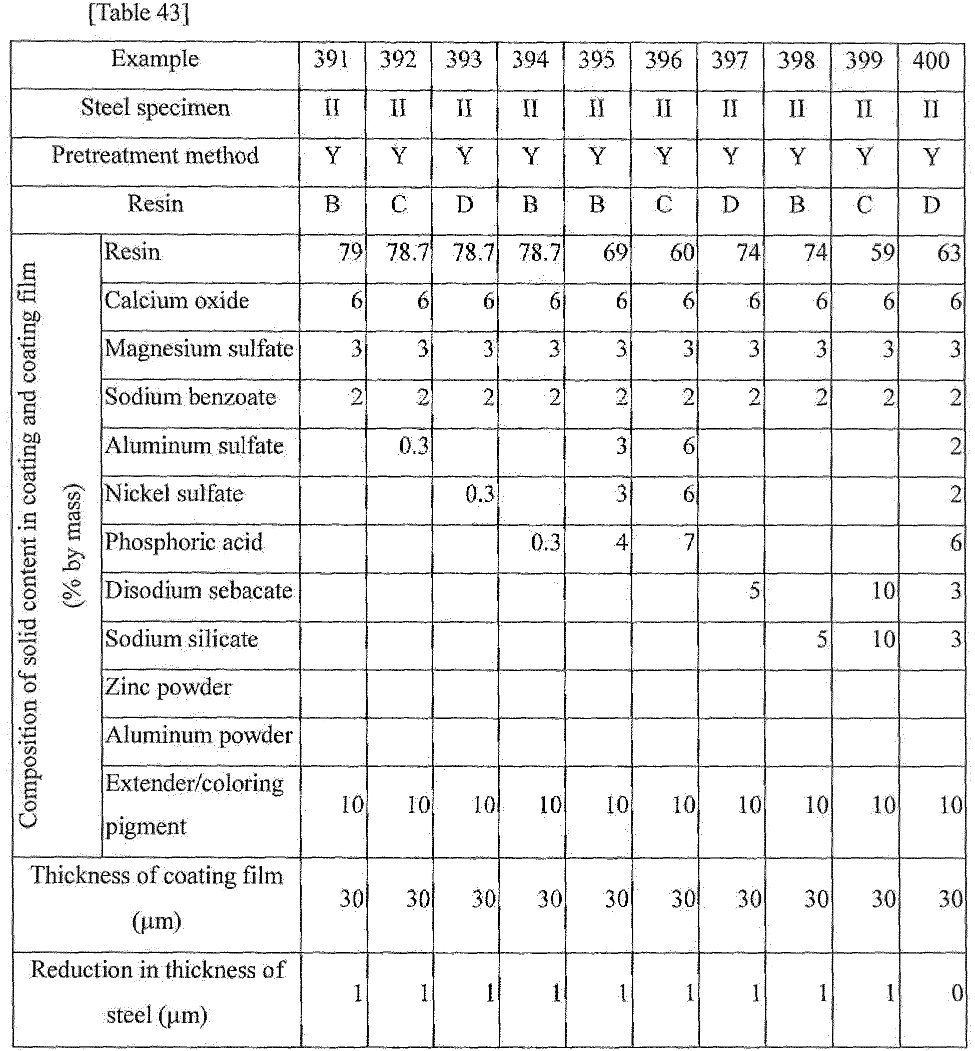

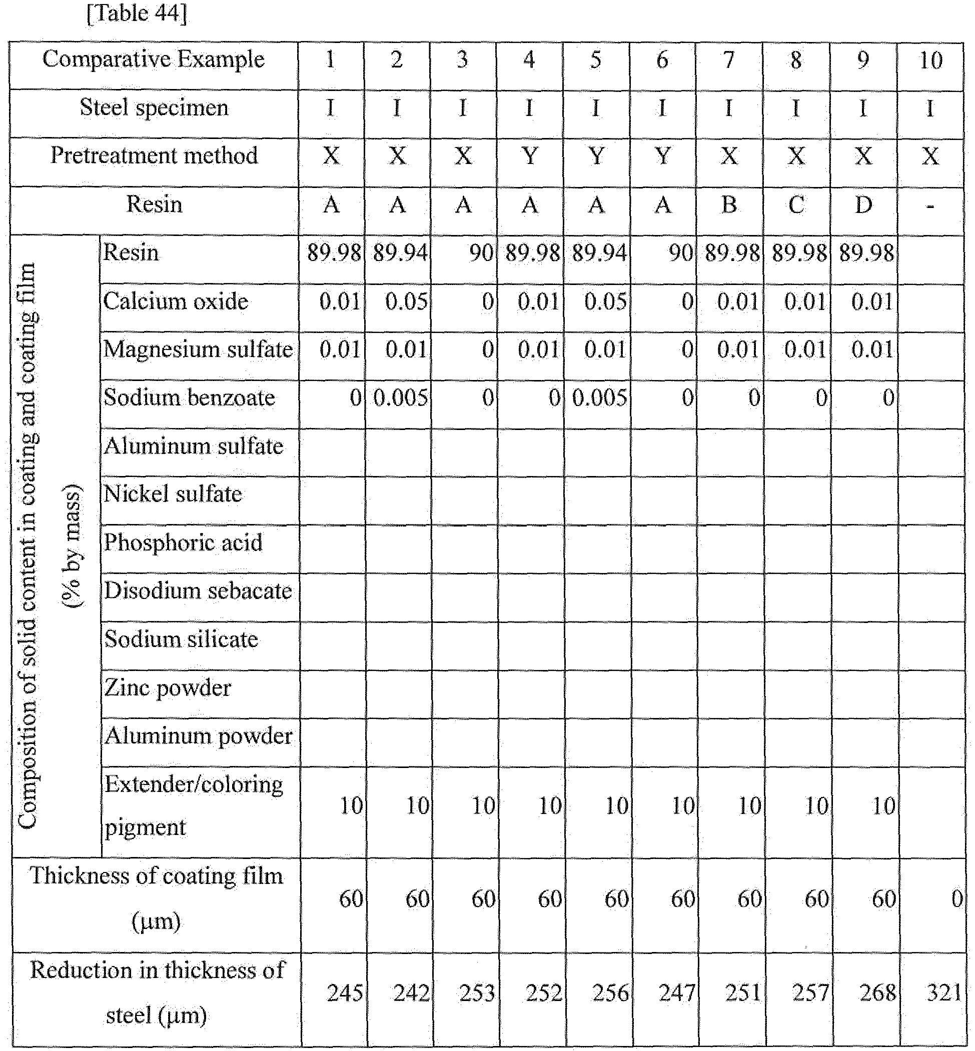

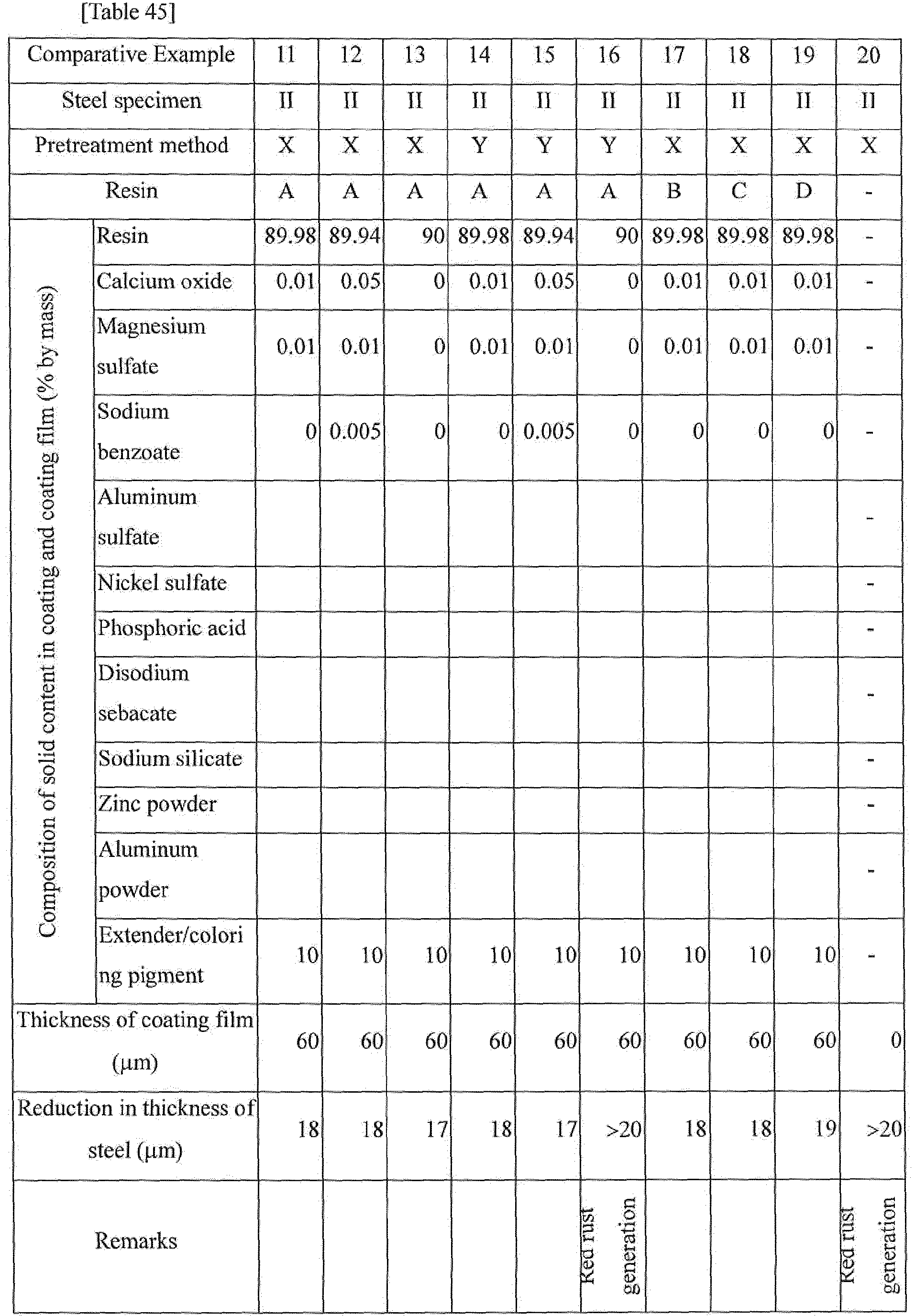

In any of Examples 1-400, the thickness reductions of the steel were smaller than those of Comparative Examples, and thus the corrosion resistances of the coated steel were higher. In Comparative Example 10 where the steel did not comprise a coating film on the surface thereof, the reduction in the steel thickness as large as 321 µm occurred after the exposure testing, and in Comparative Example 20 where the steel did not comprise a coating film on the surface thereof as well, the zinc-plating on the surface of the steel disappeared (the thickness reduction of the steel exceeded 20 µm) and red rust was generated due to the corrosion of the steel as the substrate after the exposure testing.

## Claims

1. A coating comprising:
calcium oxide and/or calcium hydroxide;
magnesium sulfate;
benzoic acid and/or a benzoate salt; and
a resin,
wherein the coating comprises 0.1-30 parts by mass in total of the calcium oxide and calcium hydroxide, 0.05-15.0 parts by mass of the magnesium sulfate, and 0.01-10 parts by mass in total of the benzoic acid and the benzoate salts per 100 parts by mass of a total solid content in the coating.

2. The coating according to Claim 1, further comprising: a metal sulfate other than magnesium sulfate; and/or phosphoric acid,
wherein the metal sulfate has a solubility of 0.5 g or more in 100 g of water at 5°C.

3. The coating according to Claim 2, wherein the coating comprises 20 parts by mass or less in total of the metal sulfates and the phosphoric acid per 100 parts by mass of the total solid content in the coating.

4. The coating according to any one of Claims 1-3, further comprising at least one compound selected from the group consisting of sebacic acid, sebacate salts, and silicate salts.

5. The coating according to Claim 4, wherein the coating comprises 20 parts by mass or less in total of the sebacic acid, the sebacate salts, and the silicate salts per 100 parts by mass of the total solid content in the coating.

6. The coating according to any one of Claims 1-5, further comprising at least one metal powder selected from the group consisting of aluminum powder, zinc powder, and alloy powders containing aluminum and/or zinc.

7. The coating according to Claim 6, wherein the coating comprises 80 parts by mass or less in total of the aluminum powder, the zinc powder, and the alloy powders containing aluminum and/or zinc per 100 parts by mass of the total solid content in the coating.

8. The coating according to any one of Claims 1-7, further comprising a solvent.

9. The coating according to any one of Claims 1-8, wherein the coating comprises 3-95 parts by mass of the resin per 100 parts by mass of the total solid content in the coating.

10. A coated steel comprising steel and a coating film formed on a surface of the steel,
wherein the coating film comprising:
calcium oxide and/or calcium hydroxide;
magnesium sulfate;
benzoic acid and/or a benzoate salt; and
a resin, and
wherein the coating film comprises 0.1-30 parts by mass in total of the calcium oxide and calcium hydroxide, 0.05-15.0 parts by mass of the magnesium sulfate, and 0.01-10 parts by mass in total of the benzoic acid and the benzoate salts per 100 parts by mass of the coating film.

11. The coated steel according to Claim 10, wherein the steel is a plated steel.

## Patentansprüche

1. Beschichtung, umfassend:
Kalziumoxid und/oder Kalziumhydroxid;
Magnesiumsulfat;
Benzoesäure und/oder ein Benzoatsalz; und
ein Harz,
wobei die Beschichtung 0,1 bis 30 Masseteile insgesamt des Kalziumoxids und Kalziumhydroxids, 0,05 bis 15,0 Masseteile des Magnesiumsulfats und 0,01 bis 10 Masseteile insgesamt der Benzoesäure und/oder der Benzoatsalze pro 100 Masseteilen eines Gesamtfeststoffgehalts in der Beschichtung umfasst.

2. Beschichtung nach Anspruch 1, ferner umfassend: ein Metallsulfat, das nicht Magnesiumsulfat ist; und/oder Phosphorsäure,
wobei das Metallsulfat eine Löslichkeit von 0,5 g oder mehr in 100 g Wasser bei 5°C hat.

3. Beschichtung nach Anspruch 2, wobei die Beschichtung 20 Masseteile oder weniger insgesamt der Metallsulfate und der Phosphorsäure pro 100 Masseteilen des Gesamtfeststoffgehalts in der Beschichtung umfasst.

4. Beschichtung nach einem der Ansprüche 1 bis 3, ferner umfassend zumindest eine Verbindung, ausgewählt aus der Gruppe bestehend aus Sebacinsäure, Sebacatsalzen und Silicatsalzen.

5. Beschichtung nach Anspruch 4, wobei die Beschichtung 20 Masseteile oder weniger insgesamt der Sebacinsäure, Sebacatsalze und der Silicatsalze pro 100 Masseteilen des Gesamtfeststoffgehalts in der Beschichtung umfasst.

6. Beschichtung nach einem der Ansprüche 1 bis 5, ferner umfassend zumindest ein Metallpulver, ausgewählt aus der Gruppe bestehend aus Aluminiumpulver, Zinkpulver und Legierungspulvern, die Aluminium und/oder Zink enthalten.

7. Beschichtung nach Anspruch 6, wobei die Beschichtung 80 Masseteile oder weniger insgesamt des Aluminiumpulvers, Zinkpulvers und der Legierungspulver, die Aluminium und/oder Zink enthalten, pro 100 Masseteilen des Gesamtfeststoffgehalts in der Beschichtung umfasst.

8. Beschichtung nach einem der Ansprüche 1 bis 7, ferner umfassend ein Lösemittel.

9. Beschichtung nach einem der Ansprüche 1 bis 8, wobei die Beschichtung 3-95 Masseteile des Harzes pro 100 Masseteilen des Gesamtfeststoffgehalts in der Beschichtung umfasst.

10. Beschichteter Stahl, umfassend Stahl und einen Beschichtungsfilm, der auf einer Oberfläche des Stahls gebildet ist,
wobei der Beschichtungsfilm umfasst:
Kalziumoxid und/oder Kalziumhydroxid;
Magnesiumsulfat;
Benzoesäure und/oder ein Benzoatsalz; und
ein Harz,
wobei die Beschichtung 0,1 bis 30 Masseteile insgesamt des Kalziumoxids und Kalziumhydroxids, 0,05 bis 15,0 Masseteile des Magnesiumsulfats und 0,01 bis 10 Masseteile insgesamt der Benzoesäure und/oder der Benzoatsalze pro 100 Masseteilen eines Gesamtfeststoffgehalts in der Beschichtung umfasst.

11. Beschichteter Stahl nach Anspruch 10, wobei der Stahl plattierter Stahl ist.

## Revendications

1. Revêtement comprenant :
un oxyde de calcium et/ou un hydroxyde de calcium ;
un sulfate de magnésium ;
un acide benzoïque et/ou un sel de benzoate ; et
une résine,
dans lequel le revêtement comprend 0.1-30 parties en masse au total de l'oxyde de calcium et hydroxyde de calcium, 0.05-15.0 parties en masse du sulfate de magnésium et 0.01-10 parties en masse au total de l'acide benzoïque et des sels de benzoate par 100 parties en masse d'un contenu solide total dans le revêtement.

2. Revêtement selon la revendication 1, comprenant en outre : un sulfate de métal autre que du sulfate de magnésium ; et/ou un acide phosphorique,
dans lequel le sulfate de métal a une solubilité de 0.5 g ou plus dans 100 g d'eau à 5°C.

3. Revêtement selon la revendication 2, dans lequel le revêtement comprend 20 parties en masse ou moins au total des sulfates de métal et l'acide phosphorique par 100 parties en masse du contenu solide total dans le revêtement.

4. Revêtement selon une quelconque des revendications 1-3, comprenant en outre au moins un composé sélectionné dans le groupe composé de l'acide sébacique, les sels de sébaçate et les sels de silicate.

5. Revêtement selon la revendication 4, dans lequel le revêtement comprend 20 parties en masse ou moins au total de l'acide sébacique, les sels de sébaçate, et les sels de silicate par 100 parties en masse du contenu solide total dans le revêtement.

6. Revêtement selon une quelconque des revendications 1-5, comprenant en outre au moins une poudre métallique sélectionnée dans le groupe composé de la poudre d'aluminium, poudre de zinc et des poudres d'alliages contenant de l'aluminium et/ou du zinc.

7. Revêtement selon la revendication 6, dans lequel le revêtement comprend 80 parties en masse ou moins au total de la poudre d'aluminium, poudre de zinc et les poudres d'alliages contenant de l'aluminium et/ou du zinc par 100 parties en masse du contenu solide total dans le revêtement.

8. Revêtement selon une quelconque des revendications 1-7, comprenant en outre un solvant.

9. Revêtement selon une quelconque des revendications 1-8, dans lequel le revêtement comprend 3-95 parties en masse de la résine par 100 parties en masse du contenu solide total dans le revêtement.

10. Acier revêtu comprenant de l'acier et un film de revêtement formé sur une surface de l'acier,
dans lequel le film de revêtement comprend :
un oxyde de calcium et/ou un hydroxyde de calcium ;
un sulfate de magnésium ;
un acide benzoïque et/ou un sel de benzoate ; et
une résine, et
dans lequel le revêtement comprend 0.1-30 parties en masse au total de l'oxyde de calcium et hydroxyde de calcium, 0.05-15.0 parties en masse du sulfate de magnésium et 0.01-10 parties en masse au total de l'acide benzoïque et des sels de benzoate par 100 parties en masse du film de revêtement.

11. Acier revêtu selon la revendication 10, dans lequel l'acier est un acier plaqué.
